# EUROPEAN PATENT APPLICATION

(11) **EP 1 372 088 A1**
(43) Date of publication of application: **17.12.2003**
(21) Application number: 02705164.8
(22) Date of filing: 14.03.2002
(51) Int. Cl.: G06F 17/30, G06F 17/21, G06F 12/00, G06F 13/00

(54) **DOCUMENT DATA PROCESSING DEVICE, SERVER DEVICE, TERMINAL DEVICE, AND DOCUMENT PROCESSING SYSTEM**

(30) Priority: 23.03.2001 JP 2001084803; 06.03.2002 JP 2002061132
(71) Applicant: MATSUSHITA ELECTRIC INDUSTRIAL CO., LTD., Kadoma-shi, Osaka 571-8501 (JP)
(72) Inventor: TADA, Hiroyuki, Kawasaki-shi, Kanagawa 214-0022 (JP); TAKEUCHI, Shunichi, Kanagawa 223-0053 (JP)
(74) Representative: Grünecker, Kinkeldey, Stockmair & Schwanhäusser Anwaltssozietät
(86) International application number: JP0202396
(87) International publication number: WO02077866

(57) **Abstract**

The present invention is configured such that a divided document data is added link information that indicates a link to a different divided document data, and the title of the different divided document data, top word/phrase in the different divided document data, or word/phrase that represents the different divided document data is added into the link information. In addition, the present invention is configured such that the word/phrase length, character color, or character size varies in accordance with the data volume of the different page that the link information corresponds to.

## Description

### Technical Field

The present invention relates to a document data processor, server apparatus, terminal apparatus, and document data processing system for processing document data described in a structural description language.

### Background Art

Combined with the spread of the Internet over recent years, the circulation of contents (multimedia data such as document, video, and voice) described in structural description languages such as HTML (Hyper Text Markup Language) facilitated by the WWW (World Wide Web) has been in rapid progress.

As for HTML, its standardization is in progress by W3C (World Wide Web Consortium), and the specification of HTML 4.01 is described on W3C's web page at: http://www.w3.org/TR/htm1401/.

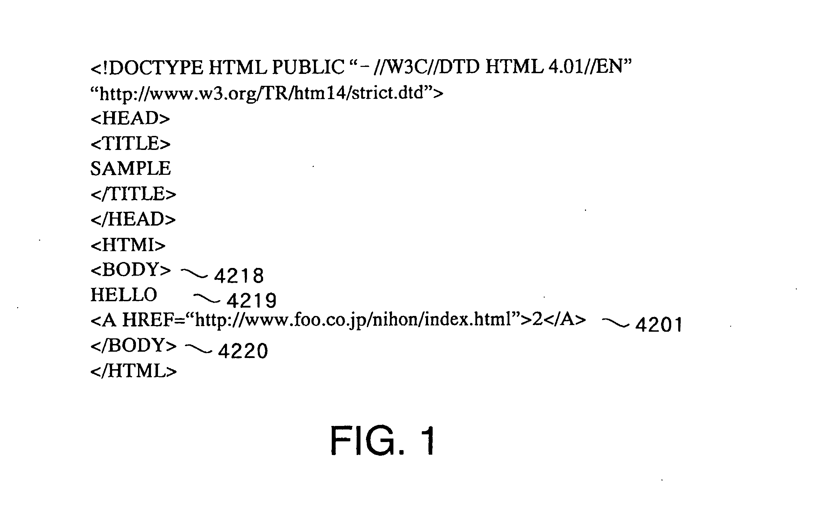

Next, the description of HTML will be explained with reference to FIG. 1. FIG. 1 shows an example of HTML description.

As shown in FIG. 1, HTML is capable of structuring a document by defining HEAD tags, TITLE tags, HTML tags, and BODY tags. Moreover, as 4201 in the figure shows, HTML is characterized by its abilities to use hyper text link tags (HYPERTEXT LINK TAG) indicated as <A HREF> (hereinafter called "link tags") to realize a hyper text that establishes a link to another HTML file, image file, or voice file.

Furthermore, the WWW is structured to correspond to a system in which a server that stores contents described in HTML (multimedia data such as document, video, and voice) and a client that requests to obtain the server-stored multimedia data are connected over a network. Such system provided, the WWW is structured in such a way as to send a data request from the client to server and send the data that corresponds to the request from the server to the client under HTTP (Hyper Text Transport Protocol). As for the specification of HTTP, it is described in RFC 2616.

In addition, with the server and client, the WW can be implemented with all-purpose computers such as workstations and personal computers. Upon the server computer, HTTP server programs are executed. On the other hand, on the client computer, communication is performed using HTTP, and HTML browser programs that interpret HTML and display data are executed.

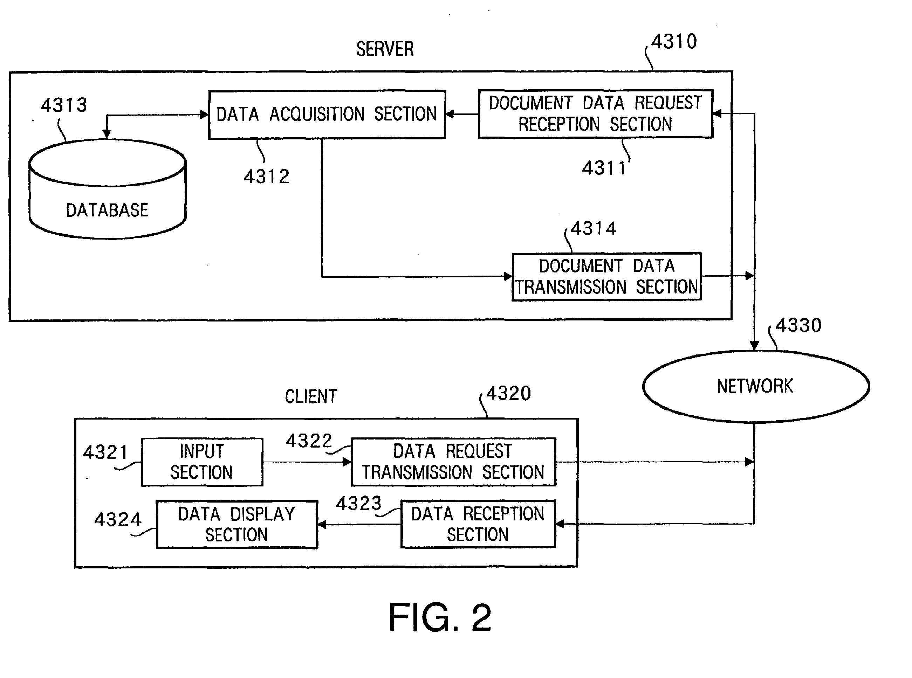

Next, the operation of the WWW will be described with reference to FIG. 2. FIG. 2 shows a block diagram of a system that implements the WWW.

First, the user requests HTML contents by specifying an URL (Uniform Resource Locator) of the desired HTML contents through input section 4321 of client 4320. URL is a standard relating to resource identifiers on the network and is described in RFC 1738.

The request input from input section 4321 is transmitted to server 4310 by way of network 4330 by data request transmission section 4322.

Server 4310 receives the request sent from client 4320 in document data request reception section 4311. Next, server 4310 acquires the requested HTML contents in data acquisition section 4312 from database 4313. Then, data acquisition section 4312 sends the acquired HTML contents to data transmission section 4314 . Document data transmission section 4314 transmits the received HTML contents to client 4320 by way of network 4330.

Client 4320 receives the requested HTML contents in data reception section 4323. Then, client 4320 displays the received HTML contents on data display section 4324.

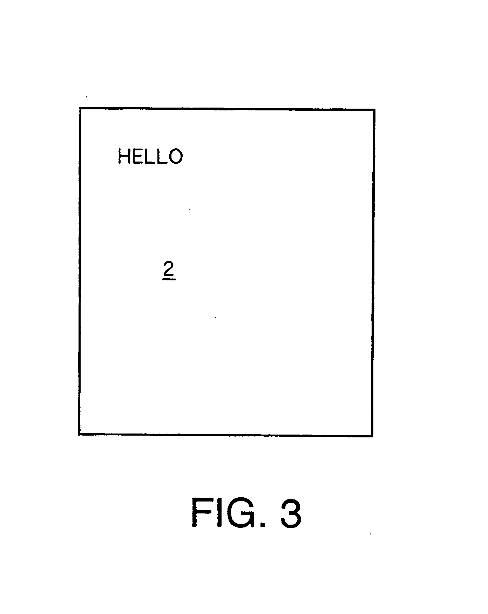

For example, if client 4320 receives the HTML contents shown in FIG. 1, data display section 4324 interprets character sequence 4219, namely "HELLO," between <BODY> 4218 and </BODY > 4220 as the contents to display. Then, data display section 4324 displays character sequence 4219, "HELLO." In addition, data display section 4324 interprets the character "2" between <A HREF> and </A> shown in 4201 as a link text. Then, data display section 4324 displays the character "2." FIG. 3 shows an example wherein data display section 4324 interprets and displays the HTML contents of FIG. 1.

Moreover, with the spread of the WWW, the spread of mobile computing environment by mobile phones and PHS and such is in rapid progress.

Under such circumstances, information providing services for resource-limited apparatus, namely mobile phones, have been emerging such as "i-mode" by NTT DoCoMo, "EZweb" by KDDI, and "J-SKY Web" by J-PHONE.

Information about "i-mode," "EZweb," and "J-SKY Web" are available at http://www.nttdocomo.co.jp/i/index.html, http://www.au.kddi.co.jp/ezweb/index.html, and at http://www.j-phone-east.com/p_and_s/sds/jskyweb/star t.htm, respectively.

However, mobile terminal apparatus that utilize such information providing services from the server nevertheless have various limitations in terms of size of information they are capable of displaying and resolution and such. So, mobile phones have limitations in terms of information acquisition and displaying. For this reason, the server divides contents into several and provides mobile phone users with links that connect to these divided contents. Presently, several of such contents providing methods have been proposed.

For example, Japanese Patent Unexamined Publication No. 10-143498 recites a technique whereby document data described in HTML is divided on a per page basis, and whereby another page number is added to each divided page as information that indicates a link to another page (hereinafter phrased "link in formation to another page").

Moreover, Japanese Patent Unexamined Publication No. 11-175426 recites a technique whereby the original contents are divided into several pages, and whereby, to each divided page, the previous and next pages, and the top and end pages are added as link information to other pages. This publication furthermore discloses a technique for providing input columns on the monitor screen to input the number of the page that the user wants to display, or a technique for displaying a scroll bar and changing the page to display using this scroll bar.

Furthermore, Japanese Patent Unexamined Publication No. 2000-76473 recites techniques whereby document data is page-divided on a per section basis, each divided page's title is collected to generate an index page, and the user is able to display the pages of desired contents by selecting the titles of choice from among the titles on the index page.

However, according to the techniques recited in Japanese Patent Unexamined Publication No. 10-143498 and Japanese Patent Unexamined Publication No. 11-175426, no information is contained in the link information regarding other pages' contents. This raises a problem by making it difficult for the user to select pages of desired contents on the basis of link information.

In addition, according to the technique recited in Japanese Patent Unexamined Publication No. 2000-76473, it is possible to acquire information about each page's contents from the titles of the pages divided on a per section basis. Nevertheless, the problem arises that, when the user wants to display another page, the user has to display the index page first, which makes the control troublesome.

Furthermore, in respect to all the above techniques, no information is provided about the data volume of the linked pages that correspond to the link information. So when the user wants to display a certain page, there is no way for the user to know the data volume of the page and hence no way to know whether the page is one of a volume that suits the capacity of the user's terminal. For this reason, the problem exists that the user, being unable to judge whether a certain page is appropriate for display, experiences difficulty selecting pages that are appropriate for display.

### Summary of the invention

An object of the present invention is to enable the user to view document data with ease when the document data is divided.

In order to achieve the above object, the present invention is configured such that a divided document data is added the title of the different divided document data, top word/phrase in the different divided document data, or word/phrase that represents the different divided document data is added into the link information that indicates a link to a different divided document data.

By this means, from the title, top phrase, or phrase representative of another page in the link information added to each page, the user viewing document data is able to know the contents of another page with ease. As a result, from the page the user currently views, the user is able to acquire information about the contents of another page with ease. So even if document data is divided, the user is able to view the document data without difficulty.

In addition, the present invention is configured such that the word/phrase length, character color, and character size vary in accordance with the data volume of the remote pages that the link information corresponds to.

By this means, the user viewing document data is able to determine the data volume of each divided page on the basis of the word/phrase length, character color, or character size. By this means, the user is able to judge as to the adequacy of displaying a certain page and to select a page that is adequate for display. As a result, the user can view document data with ease.

In addition, with the present invention, a cache that stores document data is built in a terminal apparatus that receives document data, and when another divided page exists in the cache, as for the link information to this page in the cache, the word/phrase length, character color, or character size or such vary.

By this means, the user viewing document data is able to judge as to whether a linked remote page exists in the cache on the basis of the word/phrase length, character color, or character size. This enables the user to select a page stored in the cache and then display the page. As a result, the user can view document data with ease.

### Brief Description of Drawings

FIG. 1 shows an example of HTML description;
FIG. 2 shows a block diagram of a system that implements the WWW;
FIG. 3 shows a display example of the HTML document shown in FIG. 1;
FIG. 4 is a block diagram showing a configuration of a document data processing system according to Embodiment 1 of the present invention;
FIG. 5 is a hardware conf iguration diagram of a server apparatus and terminal apparatus according to Embodiment 1;
FIG. 6 is a flowchart showing the operation of a document data processing system according to Embodiment 1;
FIG. 7 shows an example of HTML description;
FIG. 8 shows an example where the HTML document shown in FIG. 7 is divided;
FIG. 9 shows an example of adding links to other divided pages according to Embodiment 1;
FIG. 10 is a diagram showing the relationship between original HTML document and divided HTML documents;
FIG. 11 is a diagram showing a display example of the HTML document shown in FIG. 9;
FIG. 12 shows an example of adding links to other divided pages according to Embodiment 1;
FIG.13 is a diagram showing a display example of the HTML document shown in FIG. 12 on the terminal apparatus side.
FIG. 14 is a block diagram showing a configuration of a document data processing system according to Embodiment 2 of the present invention;
FIG. 15 is a flowchart showing the operation of a server apparatus according to Embodiment 2;
FIG. 16 shows an example of HTML description;
FIG. 17 shows an example where the HTML document shown in FIG. 16 is divided;
FIG. 18 shows an example of adding links to other divided pages according to Embodiment 2;
FIG. 19 is a diagram showing a display example of the HTML document shown in FIG. 18;
FIG. 20 shows an example of adding links to other divided pages according to Embodiment 2;
FIG. 21A shows a display example of the HTML document shown in FIG. 20;
FIG. 21B is a diagram showing another display example of the HTML document shown in FIG. 20;
FIG. 21C is a diagram showing yet another display example of the HTML document shown in FIG. 20;
FIG. 22 is a block diagram showing a configuration of a system according to Embodiment 3 of the present invention;
FIG. 23 is a flowchart showing the operation of a server apparatus according to Embodiment 3;
FIG. 24 shows an example of HTML description;
FIG.25 shows a case where the HTML document shown in FIG.24 is divided;
FIG. 26 shows an example of adding links to other divided pages according to Embodiment 3;
FIG. 27 shows an example of adding a link that specifies the size of division to the HTML document shown in FIG. 26;
FIG. 28 is a diagram showing a display example of the HTML document shown in FIG. 27;
FIG. 29 shows an example where the HTML document shown in FIG. 24 is divided;
FIG. 30 shows an example of adding links to other divided pages according to Embodiment 3;
FIG. 31 shows an example of adding a link that specifies the size of division to the HTML document shown in FIG. 30;
FIG. 32 showing a display example of the HTML document shown in FIG. 31;
FIG. 33 is a block diagram showing configuration of a system according to Embodiment 4 of the present invention;
FIG. 34 is a block diagram showing a hardware configuration of a system according to Embodiment 4;
FIG. 35 is a flowchart showing the operation of a relay apparatus according to Embodiment 4;
FIG. 36 is a flowchart showing the operation of a server apparatus according to Embodiment 4;
FIG. 37 is a block diagram showing a configuration of a system according to Embodiment 5 of the present invention;
FIG. 38 is a block diagram showing a hardware configuration of a system according to Embodiment 5;
FIG. 39 is a flowchart showing the operation of a document data processor according to Embodiment 5;
FIG. 40 is a block diagram showing a configuration of a system according to Embodiment 6 of the present invention;
FIG.41 is a block diagram showing a hardware configuration of a system according to Embodiment 6;
FIG. 42 is a flowchart showing the operation of a terminal apparatus according to Embodiment 6;
FIG. 43 shows an example of HTML description; and,
FIG. 44 showing a display example of the HTML document shown in FIG. 43.

### Best Mode for Carrying Out the Invention

With reference to the accompanying drawings now, embodiments of the present invention will be described below.

### (Embodiment 1)

Embodiment 1 of the present invention will be described with reference to the accompanying drawings.

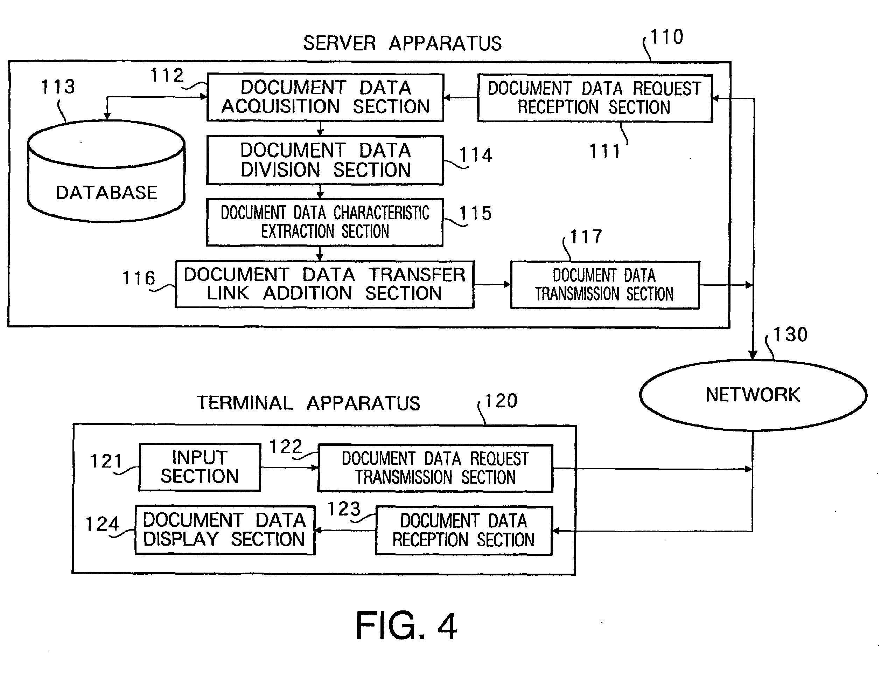

First, the configuration of the document data processing system according to Embodiment 1 of the present invention will be described with reference to FIG. 4. FIG. 4 is a block diagram showing the configuration of the document data processing system according to Embodiment 1 of the present invention. In this figure, server apparatus 110 and terminal apparatus 120, which are data processing apparatus, are connected to network 130 such as the Internet.

Server apparatus 110 comprises database 113 that manages and stores document data . The document data stored in database 113 is described in a structural description language such as HTML, that is to say, Hyper Text Markup Language.

In addition, server apparatus 110 comprises document data request reception section 111 that receives document data transmission request sent from terminal apparatus 120. Document data request reception section 111 sends the received request to document data acquisition section 112 comprised in server apparatus 110.

Document data acquisition section 112 acquires document data from database 113 in accordance with the received request and sends the acquired document data to document data division section 114 comprised in server apparatus 110.

Document data division section 114 divides the document data sent from document data acquisition section 112 and sends the divided document data to document data characteristic extraction section 115 comprised in server apparatus 110.

Document data characteristic extraction section 115 extracts the characteristic of each page of the divided document data and sends the extracted characteristic along with the divided document data to document data transfer link addition section 116 comprised in server apparatus 110.

Then to each page of the divided document data, document data transfer link addition section 116 adds link information that indicates a link to another page and sends the page to document data transmission section 117 comprised in server apparatus 110. The link information that document data transfer link addition section 116 adds to each divided document data page is each page's characteristic that document data characteristic extraction section 115 extracted.

Document data transmission section 117 transmits the document data, in which link information has been added to each divided document data page, to terminal apparatus 120 by way of network 130.

Terminal apparatus 120 is a user terminal that can be implemented with an all-purpose machine such as a personal computer.

Terminal apparatus 120 comprises input section 121 that accepts input from the user. Input section 121 sends the input from the user to document data request transmission section 122 comprised in terminal apparatus 120.

Document data request transmission section 122 transmits a request for the document data that corresponds to the input information sent from input section 121 to server apparatus 110 by way of network 130.

In addition, terminal apparatus 120 comprises document data reception section 123 that receives the document data requested to server apparatus 110 . Document data reception section 123 sends the document data to document data display section 124, which is an image display means.

Document data display section 124 has the function of a browser, whereby the received document is analyzed, converted into a displayable form, and displayed on a display.

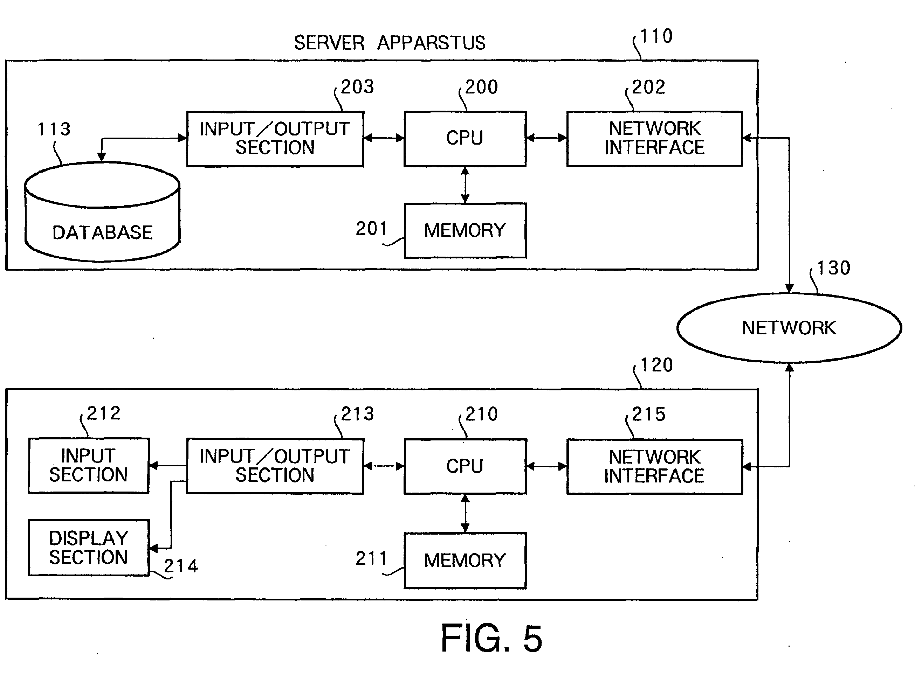

FIG. 5 shows a hardware configuration in which server apparatus 110 and terminal apparatus 120 are implemented by means of computers.

When implemented with a computer, server apparatus 110, with CPU 200 that carries out programs stored in memory 201, functions as document data division section 114, document data characteristic extraction section 115, and document data transfer link addition section 116. In addition, with CPU 200 that carries out programs stored in memory 201 and using network interface 202, the functions of document data request reception section 111 and document data transmission section 117 are assumed. Moreover, with CPU 200 carrying out a program stored in memory 201 and using input/output interface 203, the function of document data acquisition section 112 is assumed.

Memory 201 consists of a number of memory mediums such as a ROM and RAM, and programs are stored in the ROM. As for the RAM, it becomes a work area when CPU 200 carries out processing based on program descriptions.

Likewise, terminal apparatus 120 using a computer, with CPU 210 that carries out programs stored in memory 211 and using network interface 215 and input/output interface 213, functions as document data request transmission section 122 and document data reception section 123. Moreover, with CPU 210 carrying out a program stored in memory 201 and using display section 214, the function of document data display section 124 is implemented. Memory 211 consists of a number of memory mediums such as a ROM and RAM, and programs are stored in the ROM. As for the RAM, it becomes a work area when CPU 210 carries out processing based on program description.

The document data processing system according to Embodiment 1 requests document data stored in database 113 in server apparatus 110 and described in a structural description language such as Hyper Text Markup Language, that is, HTML , when the user specifies an identifier such as a Uniform Resource Locator, that is, URL, through input section 121 in terminal apparatus 120. In reply to this, server apparatus 110 transmits the document data that corresponds to a request from terminal apparatus 120 to terminal apparatus 120.

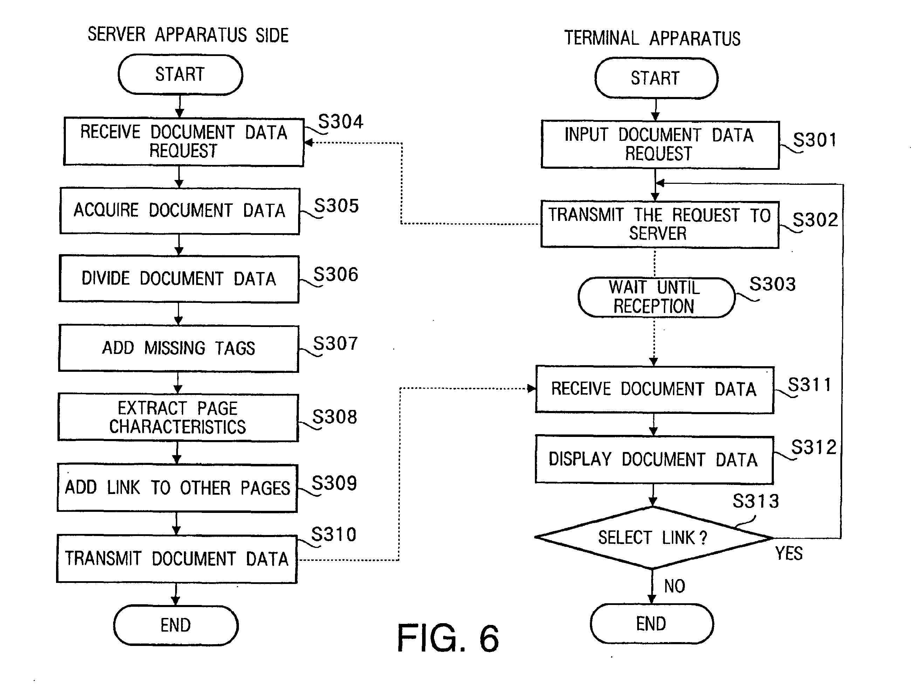

The operation of the document data processing system according to Embodiment 1 will be described below with reference to the flowchart of FIG. 6.

First, terminal apparatus 120 receives information about the document data the user requests through input section 121 (S 301) and transmits the input request to server apparatus 110 (S 302). Then, terminal apparatus 120 waits to receive the document data sent from server apparatus 110 (S 303).

In reply to this, server apparatus 110 receives the document data transmission request sent from terminal apparatus 120 in document data request reception section 111 (S 304). Next, document data acquisition section 112 acquires the document data that terminal apparatus 120 requests from database 113 (S 305).

FIG . 7 shows an example of the document data that document data acquisition section 112 acquired from database 113. Document data 400 shown inFIG. 7 is described in HTML.

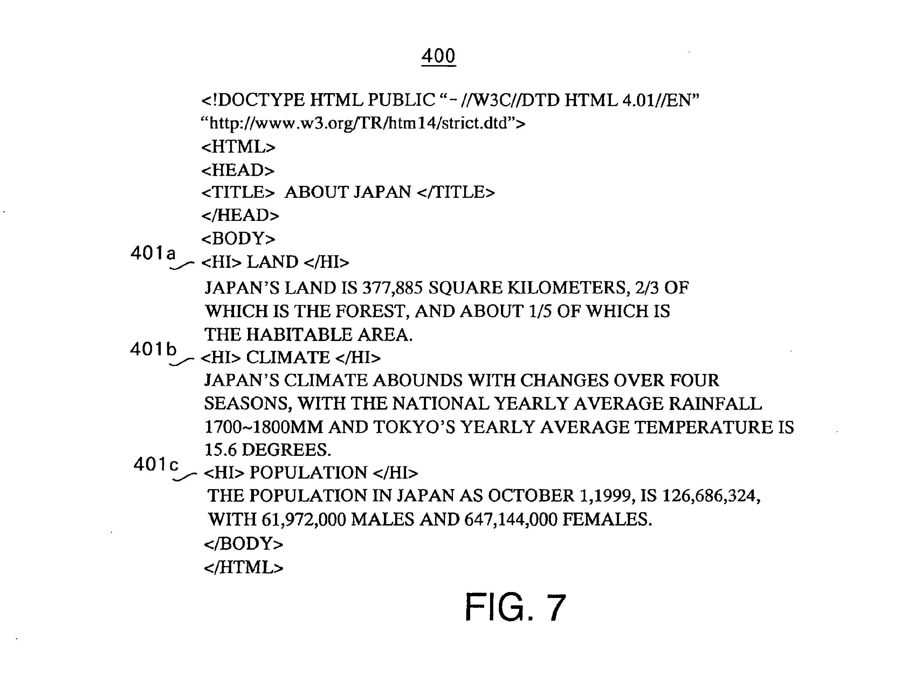

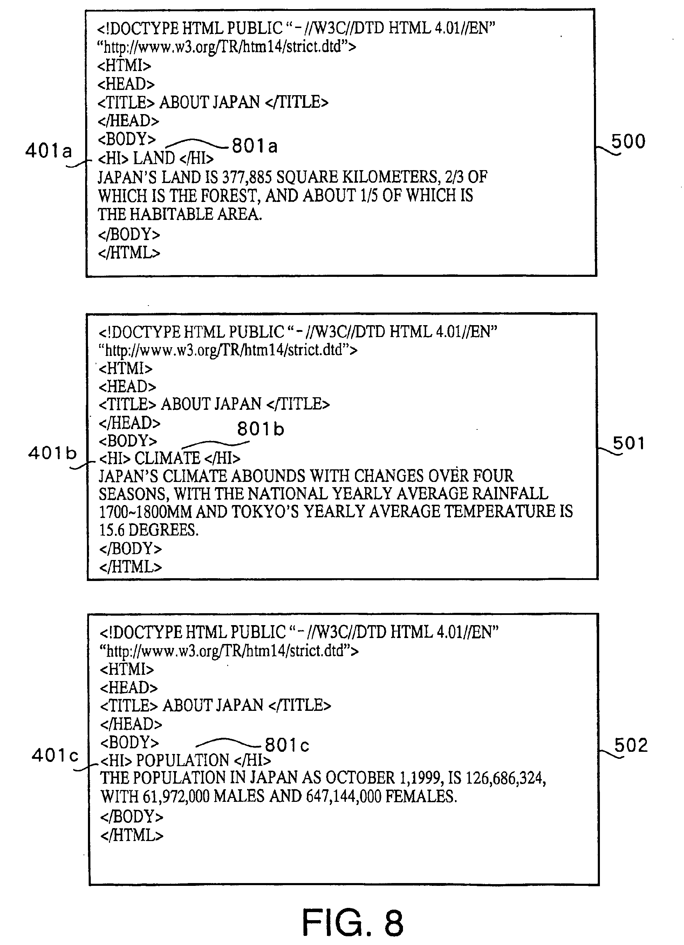

Next, document data division section 114 divides the document data acquired in document data acquisition section 112 (S 306). Document data division section 114 performs the division of document data by separating data by, for example, H1 tags 401a through 401c in FIG. 7, which are TITLE tags. Then to each divided document data page, document data division section 114 adds tags that are missing so that each page complies with the grammar of HTML (S 307). FIG. 8 shows a case where document data division section 114 has divided the document data shown in FIG. 7.

As shown in FIG. 8, document data 400 shown in FIG. 7 is divided into three pages 500 through 502. On page 500 the data between H1 tag 401a and H1 tag 401b is described, on page 501 the data between H1 tag 401b and H1 tag 401c is described, and on page 502 the data after H1 tag 401c is described.

Next, document data division section 114 sends each divided page 500 to 502 to document data characteristic extraction section 115. Then, document data characteristic extraction section 115 extracts the characteristic of each page 500 to 502 (S 308). With Embodiment 1, the title of each page 500 to 502 is adopted as the characteristic of each page 500 to 502. To be more specific, the text described between <H 1>-</ H 1> is employed as the characteristic of each page 500 to 502.

For example, when document data characteristic extraction section 115 extracts the contents of H1 tags 401a through 401c, which are title tags, as the characteristic of each page, the characteristic of each page 500 to 502 shown in FIG. 8 becomes "land, " "climate," and "population" respectively, as shown as 801a through 801c in the figure.

Next, document data characteristic extraction section 115 sends each divided page 500 to 502 and each page's extracted characteristic 801a to 801c extracted by document data characteristic extraction section 115 to document data transfer link addition section 116. At this point, document data transfer link addition section 116 adds, as link information to another page, characteristic 801 of another page between link tags <A href> and </A> that indicate a link.

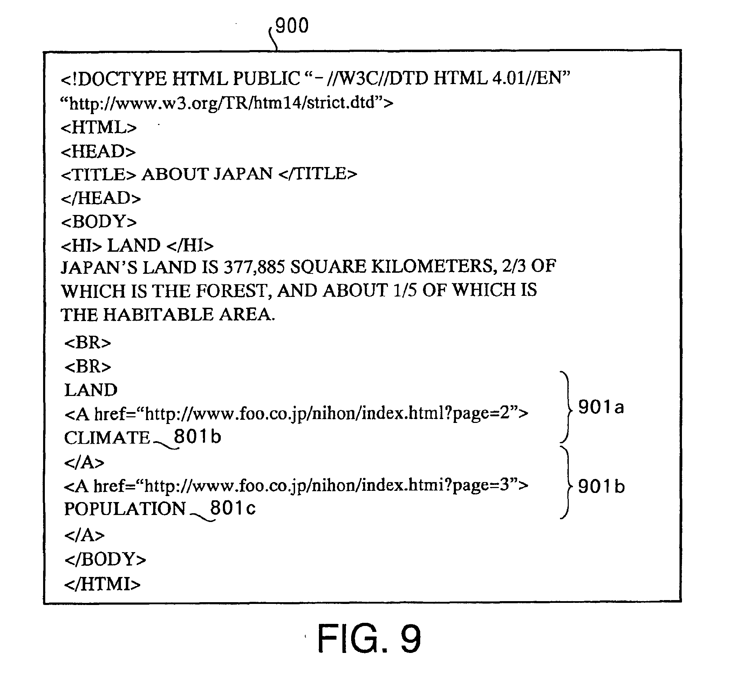

FIG. 9 shows an example where link information to another page is added to page 500 of FIG. 8. As obvious from FIG. 9, in document data 900, link tag 901a that indicates a link to page 501 and link tag 901b that indicates a link to page 502 are described. In addition, in link tag 901a, page 501's characteristic "climate" 801b is described as the link information. In addition, in link tag 901b, page 502's characteristic "population" 801c is described as the link information.

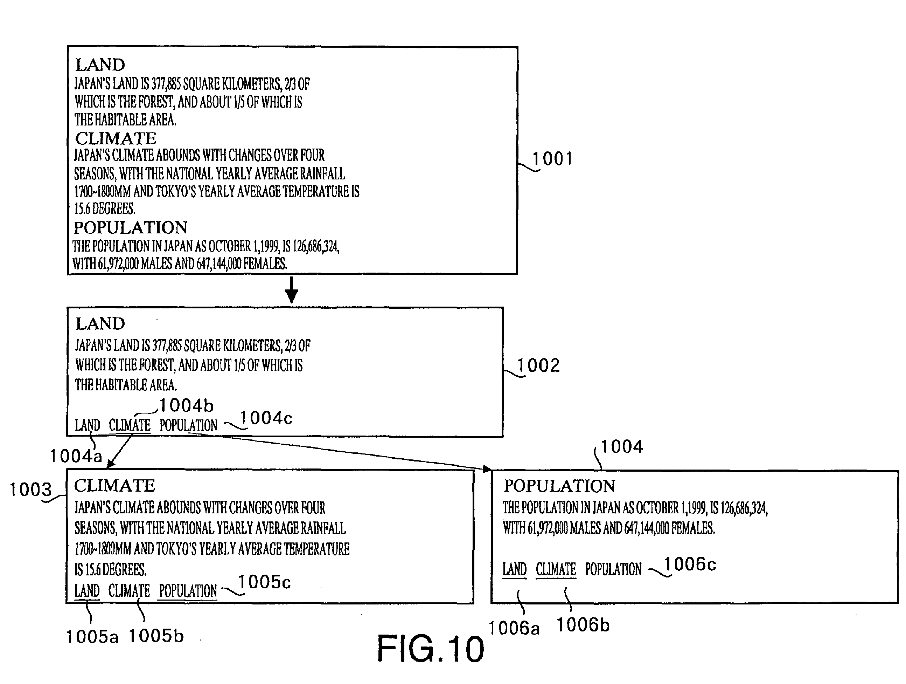

Furthermore, FIG. 10 shows the relationship between requested document data and each divided page. The document data shown as 1001 corresponds to document data 400 of FIG. 7; the document data shown as 1002 corresponds to page 500 of FIG. 8; the document data shown as 1003 corresponds to page 501 of FIG. 8; and the document data shown as 1004 corresponds to page 502 of FIG. 8. In document data 1002, text 1004b that is linked to document data 1003, and text 1004c that is linked to document data 1004 are described as the link information, in addition to text 1004a that shows its own characteristic. In document data 1003, text 1005a that is linked to document data 1002, and text 1005c that is linked to document data 1004 are described as the link information, in addition to text 1005b that shows its own characteristic. In document data 1004, text 1006a that is linked to document data 1002, and text 1006b that is linked to document data 1003 are described as the link information, in addition to text 1006c that shows its own characteristic.

Next, document data transfer link addition section 116 sends each page that is added link information to another page to document data transmission section 117 in order. First, document data transmission section 117 transmits document data 900, which is the top page of the divided document data that is added link information, to terminal apparatus 120 (S 310).

In reply to this, terminal apparatus 120 receives a divided page transmitted from server apparatus 110 in document data reception section 123 (S 311). Then, document data reception section 123 sends the received page to document data display section 124. Then, document data display section 124 analyzes the received page described in HTML and displays it on the monitor (S 312). As thus described, the top page of the document data the user requested is displayed.

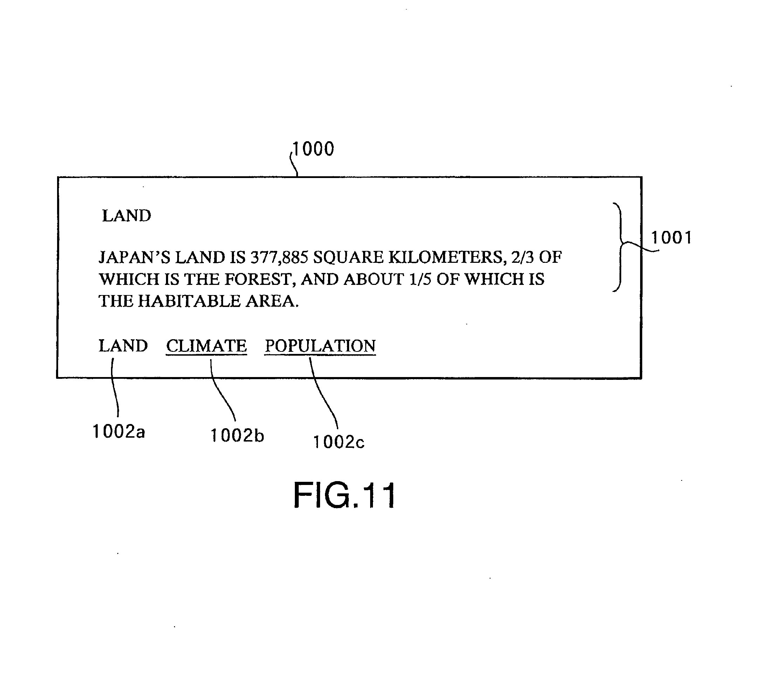

For example, document data display section 124 of terminal apparatus 120 displays the page shown in FIG. 9 as shown in FIG. 11. On page 1000 displayed on document data display section 124, text 1002b that is linked to page 501 and text 1002c that is linked to page 502 are shown in addition to portion 1001 that shows its own contents and text 1002a that shows its own characteristic.

Next, when the user wishes to view another page and requests to display another page by way of selecting link information to another page through input section 121 of terminal apparatus 120 (S 313), document data request transmission section 122 transmits a request for another page to server apparatus 110 (S 302).

The operation of server apparatus 110 will be described here, assuming a case where the user selects "climate" 1002b, which is a text that indicates a link to page 501, and requests another page.

Server apparatus 110 receives the request by means of document data request reception section 111 (S 304), and document data acquisition section 112 acquires the document data that is the source of the requested page from database 113 (S 305).

Next, the document data division section 114 divides the acquired document data (S 306) . As described earlier, the division is performed by separating the data by H1 tags, which are title tags, and then missing tags are added so that each divided page complies with the grammar of HTML (S 307). FIG. 8 shows examples of divided document data.

Next, document data division section 114 sends divided page 500 through 502 to document data characteristic extraction section 115. Then, document data characteristic extraction section 115 extracts the characteristic of each page 500 to 502 (S 308). Here again, document data characteristic extraction section 115 extracts the contents between H1 tags 401a and 401c as the characteristic of each of page 500 to 502. To be more specific, the characteristic of each page 500 to 502 becomes "land," "climate," and "population," shown as 801a through 801c in the figure respectively.

Next, document data characteristic extraction section 115 sends each divided page 500 to 502 and each page's extracted characteristics 801a through 801c to document data transfer link addition section 116. Then, document data transfer link addition section 116 adds link information to another page to each divided page (S 309).

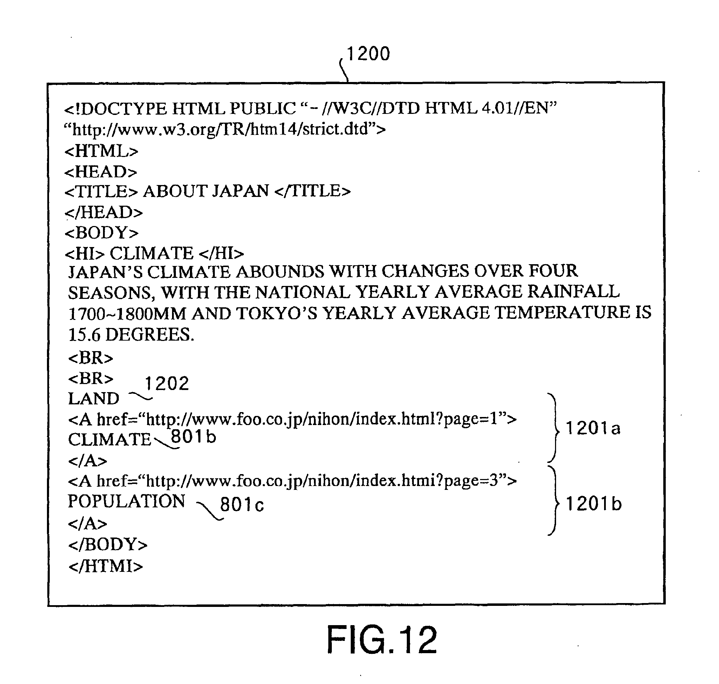

FIG. 12 shows document 1200, which is page 501 of FIG. 5 that is added links 901 and 902. As obvious from FIG. 12, in document data 1200, link tag 1201a that indicates a link to page 500 and link tag 1201b that indicates a link to page 502 are described. Furthermore, in link tag 1201a, page 500's characteristic "land" 1202 is described as the link information. In link tag 1201b, page 502 ' s characteristic "population" 801c is described.

Next, document data transfer link addition section 116 sends document data 1200 that is added link information to another page to document data transmission section 117. Then, document data transmission section 117 transmits the divided pages requested from terminal apparatus 120 to terminal apparatus 120 (S 310).

Terminal apparatus 120 receives a divided page transmitted from server apparatus 110 in document data reception section 123 (S 311).

Document data receiving section 123 sends the received page to document data display section 124, and document data display section 124 displays the page the user requested (S 312).

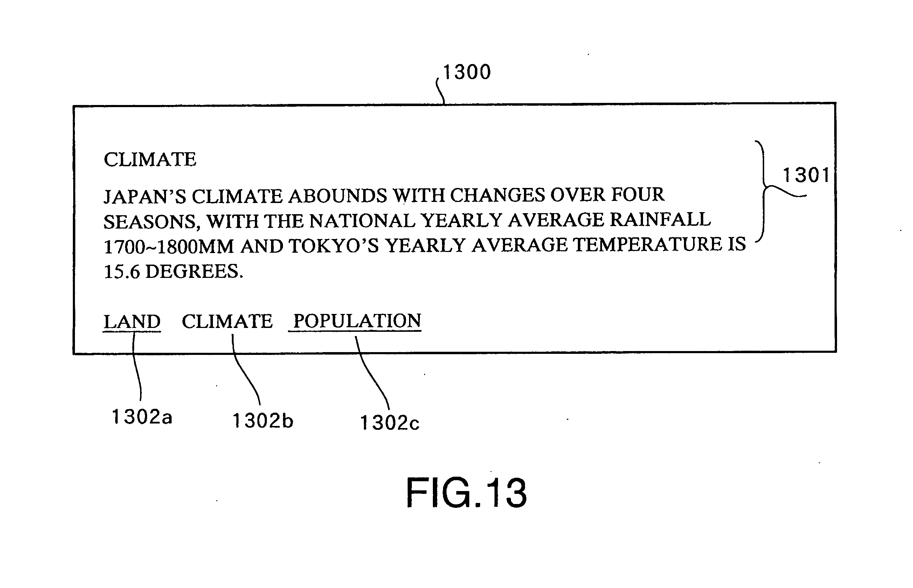

FIG. 13 shows the page in FIG. 12 displayed on document data display section 124. On page 1300 displayed on document data display section 124, text 1302a that is linked to page 500 and text 1302c that is linked to page 502 are described as the link information in addition to portion 1301 that shows its own contents and text 1302b that shows its own characteristic.

Even if the user selects "population" and "land" that indicate links to other pages, terminal apparatus 120 is capable of displaying these pages by repeating processings of S 310 through S 313.

As described above, according to Embodiment 1, it is possible to describe information that indicates the contents of another page on each page of divided document data as link information to another page. By this means, from the link information added to each page, the user viewing document data is able to know the contents of another page. The user is also able to know information about another page from the page the user currently views and is able to acquire the contents of another page with ease. So even when document data is divided, the user is able to view the document data without difficulty.

In addition, according to Embodiment 1, it is possible to employ another page's title as the link information that indicates the contents of another page. Each title is a piece of information that manifests the characteristic of the page, so that the link information accurately manifests the contents of another page. As a result, the user is able to learn the contents of another page accurately.

Incidentally, although Embodiment 1 employs another page's title as the link information that indicates the contents of another page, it is also possible to employ the top word/phrase in the body of another page. In this case, the top word/phrase in the text described between <body> and </body>, that are tags denoting the body, needs to be extracted.

In addition, such configuration is also possible in which a given number of characters are extracted from the top of the text described between <body> and </body>. as link information.

Moreover, although Embodiment 1 employs another page's title as the link information that indicates the contents of another page, it is also possible to employ a keyword from the contents of another page. In this case, the most frequently used word/phrase is extracted from among the words/phrases included in the text described between the tags <body> and </body>, which indicate the body, as the keyword of the contents. The possibility is high that a keyword of the contents is the word/phrase that best manifests each page's characteristic, so that link information accurately manifests the contents of another page.

Incidentally, although Embodiment 1 employs HTML as the language to describe document data in, any language that is capable of describing information about links to other pages suffices.

### (Embodiment 2)

Embodiment 2 of the present invention is configured such that description of link information varies depending on the data volume of the corresponding page in order for the user to know the data volume of a linked page.

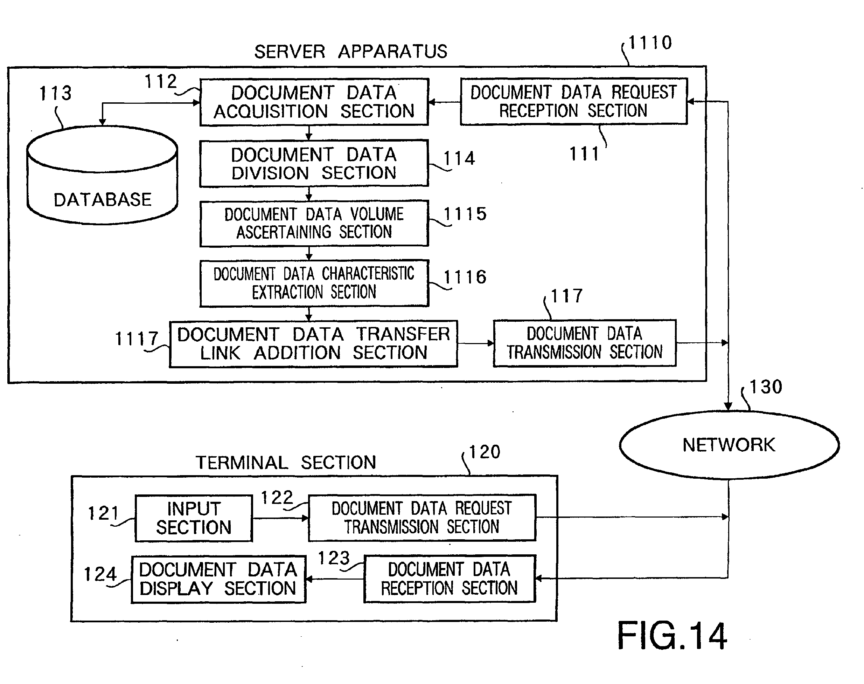

The document data processing system according to Embodiment 2 will be described below in detail with reference to the accompanying drawings. First, the configuration of the document data processing system according to Embodiment 2 will be described with reference to FIG.14. FIG. 14 is a block diagram showing the configuration of the document data processing system according to Embodiment 2.

In the figure above, server apparatus 1110 and terminal apparatus 120 are connected to network 130 such as the Internet. In particular, the document data processing system of Embodiment 2 differs from the document data system of Embodiment 1 in the configuration of server apparatus 1110.

To be more specific, server apparatus 110 extracts a character sequence of a number corresponding to the data volume of each divided page as a characteristic of each page from the top of data excluding the tags. By this means, the user viewing document data can know the data volume of each divided page from the link information and select as to which page to display.

The configuration of server apparatus 1110 will be described below. Incidentally, parts that have been already described will be assigned the same codes.

Server apparatus 1110 comprises document data volume check section 1115 that checks the data volume of each page of the document data divided by document data division section 114. Document data volume section 1115 outputs each page's checked data volume to document data characteristic extraction section 1116 comprised in server apparatus 1110.

Document data characteristic extraction section 1116 extracts the characteristic of each page of the divided document data and sends the extracted characteristic along with the divided document data to document data transfer link addition section 1117 comprised in server apparatus 1110. Document data characteristic extraction section 1116 changes the length of a character sequence extracted as the characteristic depending on each page's data volume. To be more specific, the greater the data volume of each page, the longer document data character extraction section 1116 makes the length of a character sequence to extract as a characteristic.

Document data transfer link addition section 1117 adds link information to another page to each divided page. The link information that document data transfer link addition section 1117 adds to each divided document data page is each page's characteristic that document data characteristic extraction section 1116 extracted.

Terminal apparatus 120 is the same as the terminal apparatus of Embodiment 1, and so its description will be omitted.

Moreover, when server apparatus 1110 and terminal apparatus 120 are implemented with computers, it will be as shown in FIG. 5. With CPU 200 that carries out programs stored in memory 201, the functions of document data division section 114, document data volume check section 1115, document data characteristic extraction section 1116, and document data transfer link addition section 1117 are implemented. Terminal apparatus 120 similarly using a computer is the same as Embodiment 1, and so its description will be omitted.

According to the document data processing system according to Embodiment 2, the user requests document data described in a structural description language such as HTML and stored in database 113 of server apparatus 1110 by specifying an identifier such as URL through input section 121 of terminal apparatus 120. In reply to this, server apparatus 1110 transmits the document data that corresponds to the request from terminal apparatus 120 to terminal apparatus 120.

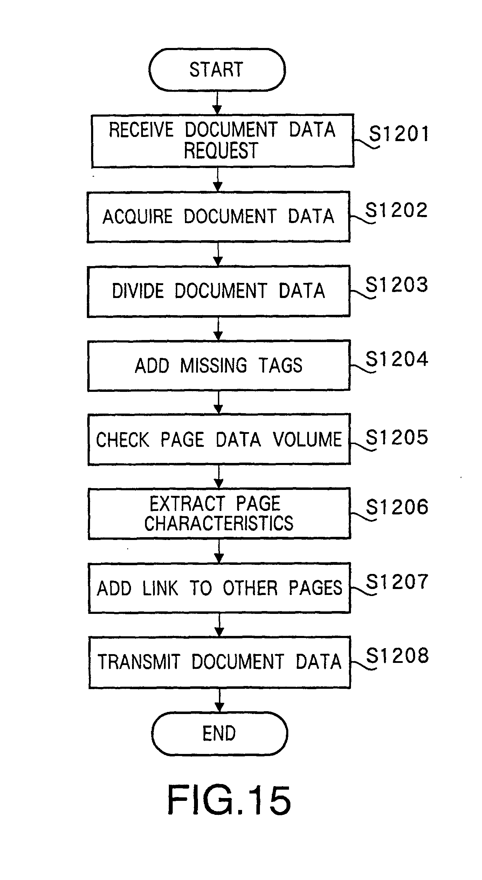

The operation of the document data processing system according to Embodiment 2 will be described below with reference to the flowchart of FIG. 15.

First, server apparatus 1110 receives the document data transmission request sent from terminal apparatus 120 in document data request reception section 111 (S 1201). Next, document data acquisition section 112 acquires the document data that terminal apparatus 120 requests from database 113 (S 1202).

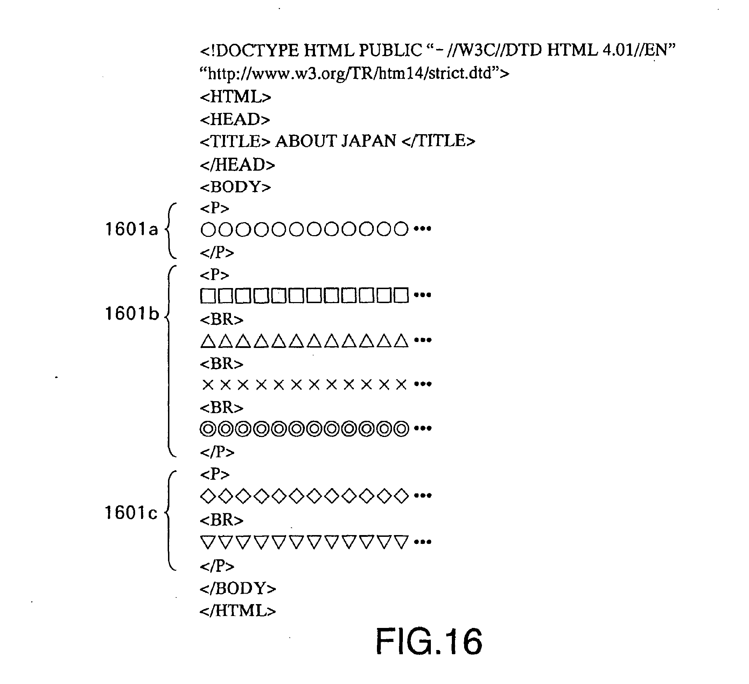

FIG. 16 shows an example of the document data that document data acquisition section 112 acquired from database 113. Document data shown in FIG. 16 is described in HTML. Incidentally in FIG. 16 symbols are shown in the character sequences to make the explanation simple; however, in reality, characters that convey meaning are described therein.

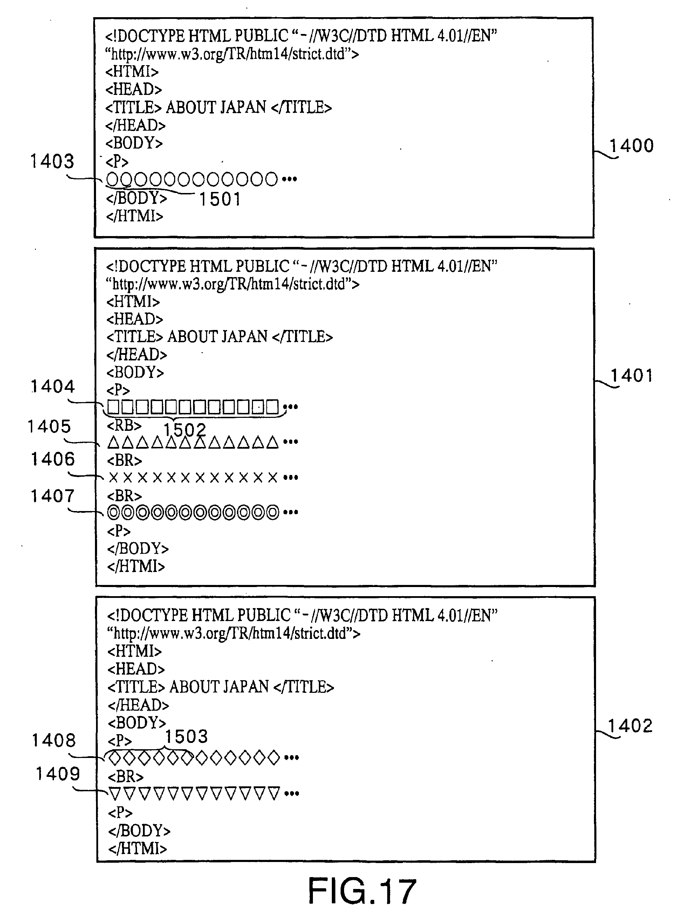

Next, the document data division section 114 divides the acquired document data (S 1203). Document data division section 114 performs the division of document data by separating data by, for example, P tags 1601a through 1601c in FIG. 16, which are paragraph tags. Then to each divided document data page, document data division section 114 adds tags that are missing so that each page complies with the grammar of HTML (S 1204) . FIG. 17 shows an example where the document data shown in FIG. 16 is divided by document data division section 114.

As shown in FIG. 17, document data shown in FIG. 16 is divided into three pages 1400 through 1402. As 1403 in the above figure shows, on page 1400 the data of P tag 1601a is described; as 1404 through 1407 in the above figure show, on page 1401 the data of P tag 1601b is described; and as 1408 and 1409 in the above figure show, on page 1402, the data of P tag 1601c is described.

Next, document data division section 114 sends each divided page 1400 to 1402 to document data characteristic extraction section 1116. Then, document data characteristic extraction section 1115 checks the data volume of the contents between the body tags on each page 1400 to 1402 that does not count the tags (S 1205).

For example, with pages 1400 through 1402 shown in FIG. 17, 1403, 1404, 1405, 1406, 1407, 1408, and 1409 are sections subject to data volume check by document data characteristic extraction section 1116 in S 1205. One character in this example is two bytes, and consequently, on page 1400 a character sequence equal to the data volume of 44 bytes is described, and on page 1401 a character sequence equal to the data volume of 224 bytes is described, and on page 1402 a character sequence equal to the data volume of 116 bytes is described.

Next, document data volume check section 1115 sends each divided page 1400 through 1402 and each page' s checked data volume to document data characteristic extraction section 1116. Then, as the characteristic of each page 1400 to 1402, document data characteristic extraction section 1116 extracts a character sequence in accordance with the data volume from the top of the data of the contents between the body tags excluding the tags (S 1206).

To be more specific, from the top of the data of the contents between the body tags excluding the tags on each page 1400 to 1402, document data characteristic extraction section 1116 extracts a character sequence that corresponds to the number of bytes where 1/10 of the data volume on each page 1400 to 1402 is rounded to the nearest tenth as the characteristic of each page. For instance, the characteristics of pages 1400 through 1402 of FIG. 17 will be 4-byte character sequence "○ ○ " 1501, 22-byte character sequence "□ □ □ □ □ □ □ □ □ □ □ " 1502, and 12-byte character string "◇ ◇ ◇ ◇ ◇ ◇" 1503, respectively.

Next, document data characteristic extraction section 1116 sends each divided page 1400 to 1402 and each page's extracted characteristics 1501 through 1503 to document data transfer link addition section 1117. Then to each divided page 1400 to 1402, document data transfer link addition section 1117 adds link information to another page (S 1207). At this point, as the link information that indicates a link to another page, document data transfer link addition section 116 adds the characteristic of another page extracted by document data characteristic extraction section 1116 between links tags <A href> and </A> that indicate a link.

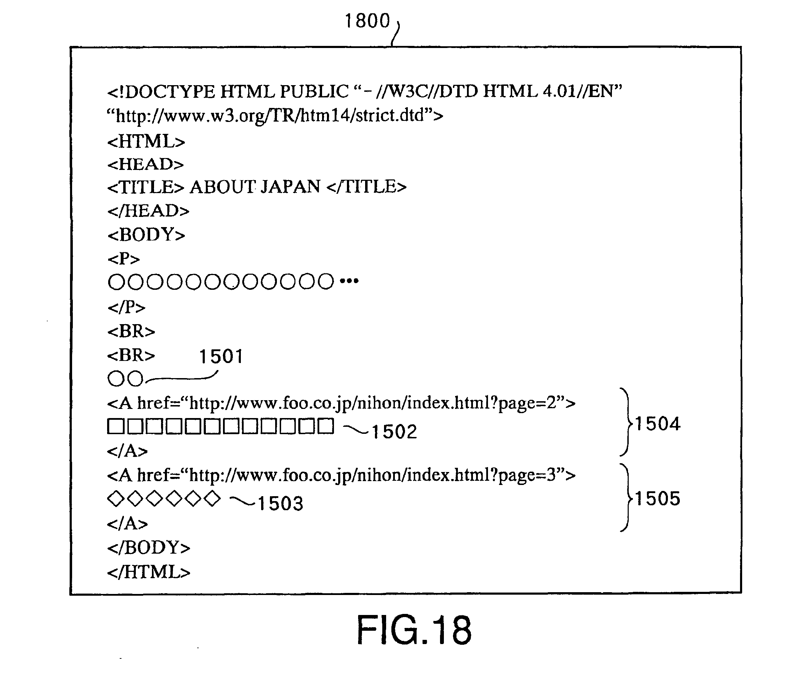

FIG. 18 shows an example of adding link information to page 1400 of FIG. 17. As obvious from FIG. 18, in document data 1800, link tag 1504 that indicates a link to page 1401 and link tag 1505 that indicates a link to page 1402 are described in addition to page 1400's characteristic "○ ○" 1501. In link tag 1504, page 1401's characteristic "□ □ □ □ □ □ □ □ □ □ □" 1502 is described. In link tag 1505, page 1402's characteristic " ◇ ◇ ◇ ◇ ◇ ◇ " 1503 is described.

Next, document data transfer link addition section 1117 sends each page that is added link information to another page to document data transmission section 117. Then, document data transmission section 117 transmits the divided document data to terminal apparatus 120 (S 1208). In this case, document data transmission section 117 transmits document data 1800, which is the top of the divided document data, to terminal apparatus 120.

Meanwhile, terminal apparatus 120 receives document data 1800, which is the top page of the divided document data transmitted from server apparatus 1110, by means of document data reception section 123.

Document data reception section 123 sends the received document data 1800 to document data display section 124. Then, document data display section 124 analyzes received document data 1800 and displays it to the user.

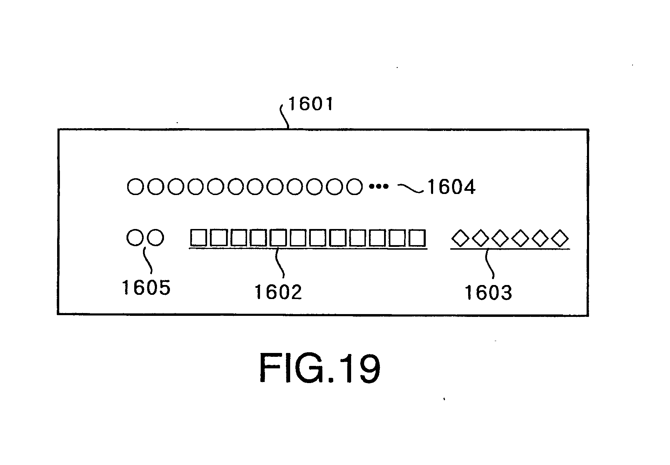

FIG. 19 shows an example of displaying document data 1800 shown in FIG. 18 by means of data display section 124 of terminal apparatus 120. On page 1601 displayed on document data display section 124, text 1602 that is linked to page 1401 and text 1603 that is linked to page 1402 are shown in addition to portion 1604 that shows its own contents and text 1605 that shows its own characteristic.

Next, when the user selects a link to another page through input section 121 of terminal apparatus 120 and thus requests to display another page, document data request transmission section 122 transmits a request for another page to server apparatus 1110. Assume here that the user requested a page by selecting link 1602 "□ □ □ □ □ □ □ □ □ □ □."

Server apparatus 1110 receives the request by means of document data request reception section 111 (S 1201) , and acquires the document data that is the source of the requested page from database 113 by means of document data acquisition section 112 (S 1202).

Next, document data division section 114 divides the document data acquired in document data acquisition section 112 ( S 1203). As described earlier, the division is performed by separating the data by P tags, which are title tags, and then missing tags are added so that each divided page complies with the grammar of HTML (S 1204) . FIG. 17 shows examples of divided document data.

Next, document data division section 114 sends each divided page 1400 to 1402 to document data characteristic extraction section 1115. Document data volume check section 1115 checks the data volume, excluding tags from the contents between the BODY tags on each page 1400 to 1402 (S 1205). In FIG. 17, the data volume of page 1400 becomes 44 bytes, the data volume of page 1401 becomes 224 bytes, and the data volume of page 1402 becomes 116 bytes.

Next, document data volume check section 1115 sends each divided page and each page's checked data volume to document data characteristic extraction section 1116. Then, as the characteristic of each page, document data characteristic extraction section 1116 extracts a character sequence in accordance with the data volume from the top of the data of the contents between the body tags excluding the tags (S 1206). Again, from the top of the data of the contents between the body tags excluding the tags on each page 1400 to 1402, document data characteristic extraction section 1116 extracts a character sequence that corresponds to the number of bytes where 1/10 of the data volume on each page 1400 to 1402 is rounded to the nearest tenth as the characteristic of each page. The characteristics of 1400 through 1402 of FIG. 17 will be "○ ○ " 1501, "□ □ □ □ □ □ □ □ □ □ □ " 1502, and "◇ ◇ ◇ ◇ ◇ ◇ " 1503, respectively.

Next, document data characteristic extraction section 1116 sends each divided page 1400 to 1402 and each page's extracted characteristic 1501 to 1503 to document data transfer link addition section 1117. Then to each divided page 1400 to 1402, document data transfer link addition section 1117 adds link information to another page (S 1207).

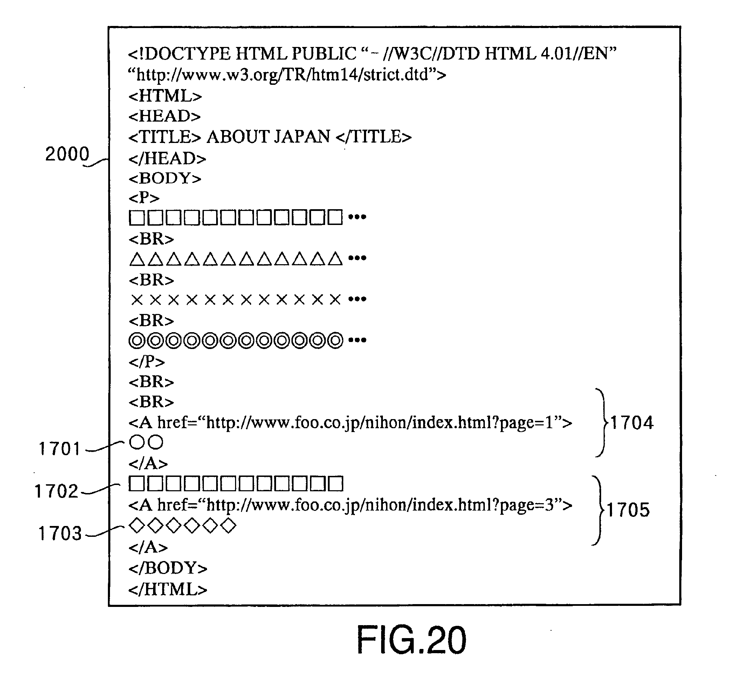

FIG. 20 shows an example of adding links to page 1401 of FIG. 17. As obvious from FIG. 20, in document data 2000, link tag 1704 that indicates a link to page 1400 and link tag 1705 that indicates a link to page 1402 are described, in addition to page 1401's characteristic "□ □ □ □ □ □ □ □ □ □ □ " 1702. In link tag 1704, page 1400's characteristic "○ ○ " 1701 is described. In link tag 1705, page 1402's characteristic "◇ ◇ ◇ ◇ ◇ ◇" 1703 is described.

Next, document data transfer link addition section 1117 sends each page that is added link information to another page to document data transmission section 117. Then, document data transmission section 117 transmits the divided page requested from terminal apparatus 120 to terminal apparatus 120 (S 1208).

Meanwhile, terminal apparatus 120 receives document data 2000 of the divided page transmitted from server apparatus 1110 by means of document data reception section 123.

Document data reception section 123 sends the received page to document data display section 124. Then, document data display section 124 analyzes received document data 2000 and displays it to the user.

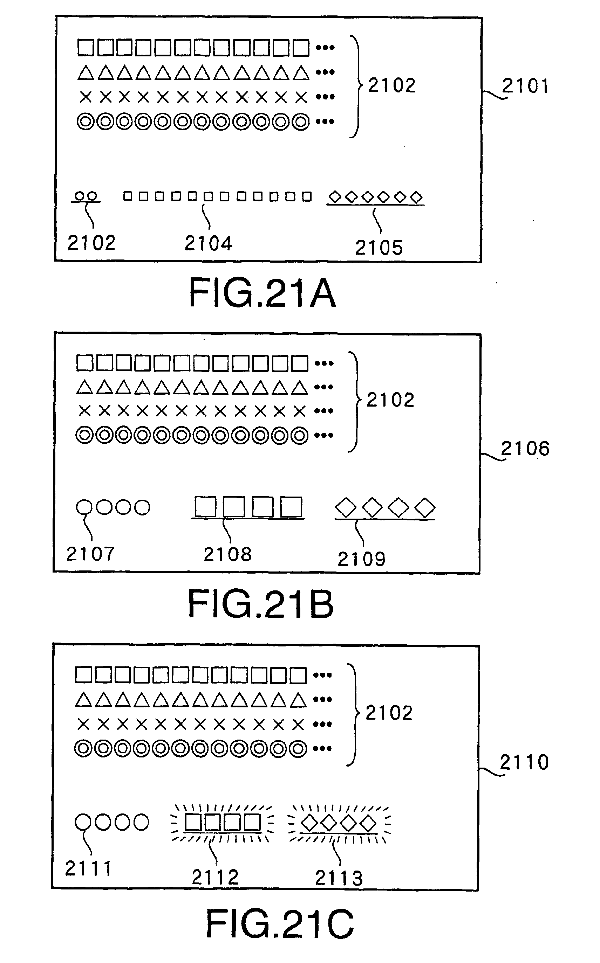

FIG. 21A shows a display example wherein document data display section 124 displays the page shown in FIG. 20 . On page 2101 displayed on document data display section 124, text 2103 that is linked to page 1400 and text 2105 that is linked to page 1402 are shown, in addition to portion 2102 that shows its own contents and text 2104 that shows its own characteristic.

As described above, with Embodiment 2 it is possible to describe link information to another page on each page of divided document data and to modify such description in accordance with the data volume of the corresponding page. By this means, the user viewing document data is able to judge the data volume of each page from the description of link information. By this means, the user is able to judge as to whether a certain page is adequate to display and select a page that is adequate to display. As a result, the user can view document data with ease.

In addition, with Embodiment 2 it is possible to change the length of a character sequence that is described as link information, according to the data volume of the corresponding page. This enables the user to know the data volume of another page visually from the length of the character sequence in the link inf ormation.

Incidentally, although Embodiment 2 is configured such that the length of a character sequence that is described as link information changes with the data volume of the corresponding page, such description is also possible whereby the character size of a character sequence that is described as link information changes with the data volume of the corresponding page. As shown as page 2106 in FIG. 21B, this makes it possible as with document data display section 124 to change the character size of texts 2107 through 2109 that each indicate a link depending on the data volume of the corresponding page. As a result, the user is able to view the size of a text that indicates a link and recognize the data volume of the corresponding page.

Incidentally, such configuration is also possible whereby information about the data volume of a linked page is transmitted from server apparatus 1110 to terminal apparatus 120, and on the terminal apparatus 120 side, the display size of a text that indicates a link is changed with the above data volume information.

Moreover, such description is also possible whereby the color or thickness of color of a character sequence described as link information is changed with data volume. As shown as page 2110 in FIG. 21C, this makes it possible as with document data display section 124 to change the color or thickness of color of texts 2111 through 2113 that each indicate a link depending on the data volume of the corresponding page. As a result, by looking at the color or thickness of color of text that indicates a link, the user is able to recognize the data volume of the corresponding page.

Incidentally, such configuration is also possible whereby information about the data volume of a linked page is transmitted from server apparatus 1110 to terminal apparatus 120, and on the terminal apparatus 120 side, the color or thickness of color of text that indicates a link is changed with the above data volume information.

Incidentally, although Embodiment 2 adopts a character sequence that indicates the contents of the linked page as text that indicates a link, this link text does not have to be a character sequence that indicates the contents of the linked page.

### (Embodiment 3)

Embodiment 3 of the present invention is configured such that a data division modifying link addition section that adds link information that specifies the size of document data division is added to Embodiment 1, thereby enabling the user viewing document data to modify the size of page division.

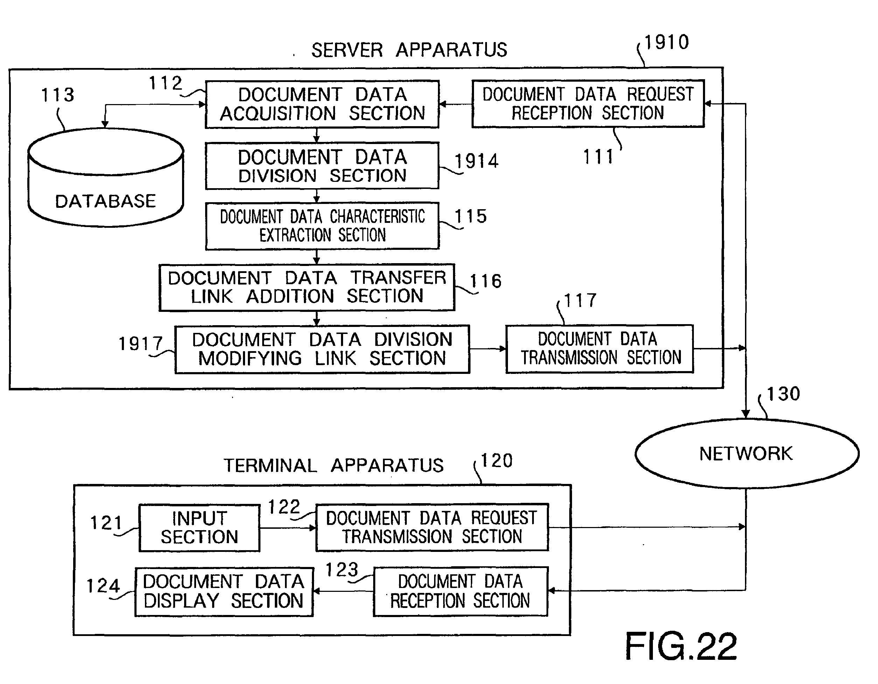

The document data processing system according to Embodiment 3 will be described below. First, the configuration of the document data processing system according to Embodiment 3 will be described with reference to FIG.22. FIG. 22 is a block diagram showing a configuration of a document data processing system according to Embodiment 3. Incidentally, parts that have been already described will be assigned the same codes.

In FIG. 22, server apparatus 1910 and terminal apparatus 120, which are data processor, are connected to network 130 such as the Internet. The document data processing system of Embodiment 3 differs from the document data system of Embodiment 1 in the configuration of server apparatus 1910.

The configuration of server apparatus 1910 will be described below. Server apparatus 1910 comprises document data division section 1914 that divides requested document data. Document data division section 1914 furthermore modifies division in accordance with instructions for division modification from terminal apparatus 120.

Server apparatus 1910 furthermore comprises data division modifying link addition section 1917 that adds link information that specifies the size of division upon dividing document data anew to each divided document data page.

Terminal apparatus 120 is the same as the terminal apparatus of Embodiment 1, and so its description will be omitted.

Moreover, when server apparatus 1910 and terminal apparatus 120 are implemented with computers, it will be as shown in FIG. 5. With CPU 200 that carries out programs stored in memory 201, the functions of document data division section 1914 and of document data division modifying link addition section 1917 are implemented. Terminal apparatus 120 which similarly uses a computer is the same as that of Embodiment 1, and so its description will be omitted.

According to the document data processing system according to Embodiment 3, the user requests document data described in a structural description language such as HTML and stored in database 113 of server apparatus 1910 by specifying an identifier such as URL through input section 121 of terminal apparatus 120. In reply to this, server apparatus 1910 transmits the document data that corresponds to the request from terminal apparatus 120 to terminal apparatus 120.

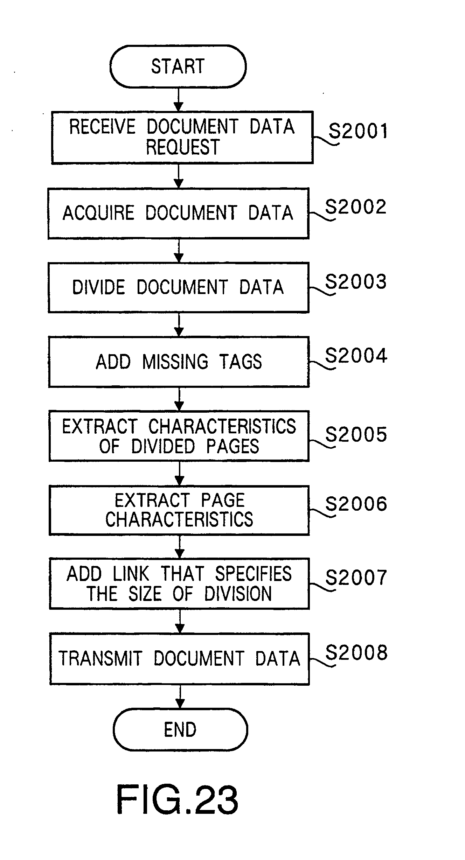

The operation of the document data processing system according to Embodiment 3 will be described below with reference to the flowchart of FIG. 23.

First, server apparatus 1910 receives a request for the transmission of document data from terminal apparatus 120 by means of document data request reception section 111 (S 2001). Next, from database 113, document data request acquisition section 112 acquires the document data that terminal apparatus 120 requested (S 2002).

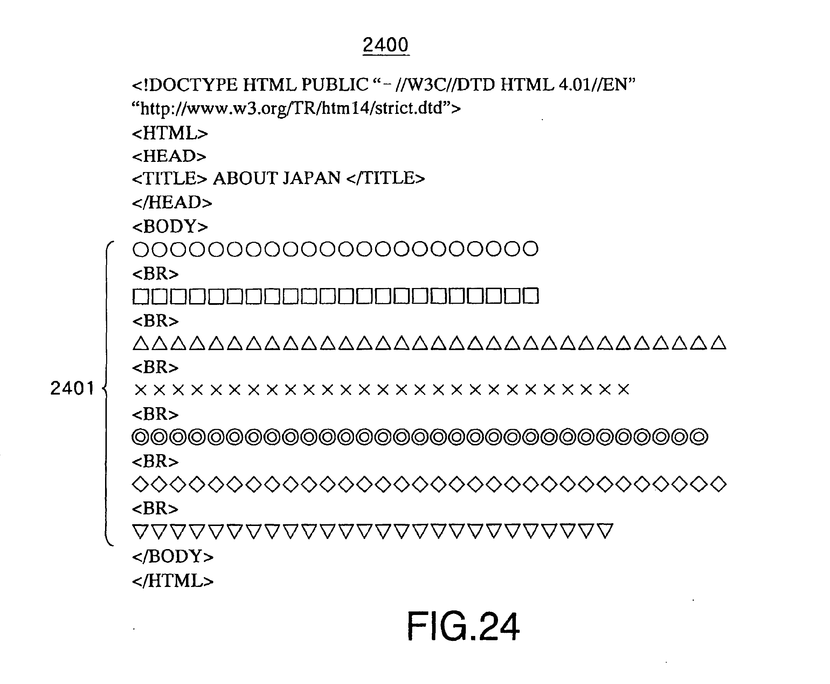

FIG. 24 shows an example of document data acquired from database 113. Document data 2400 shown in FIG. 24 is described in HTML. Incidentally, in FIG. 24, symbols are used in character sequences to make the explanations simple, but in reality, characters that have meaning are described therein. Moreover, 1 character has 2 bytes of data volume.

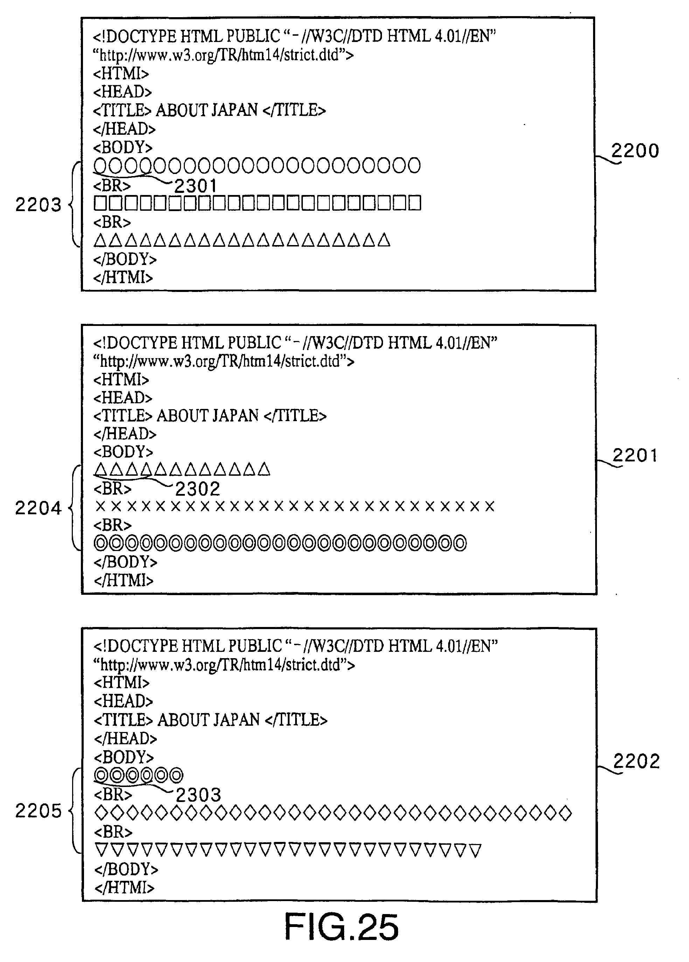

Next, the document data division section 1914 divides the acquired document data (S 2003). Document data division section 1914 performs the division of document data by, for instance, dividing the data of the contents between the BODY tags excluding the tags by every fixed number of bytes. Then to each divided document data page, document data division section 1914 adds tags that are missing so that each page complies with the grammar of HTML (S 2004). FIG. 25 shows an example of document data wherein the document data shown in FIG. 24 is divided into 128 bytes on the conditions given above.

As shown in FIG. 25, document data 2400 shown in FIG. 24 is divided into three pages 2200 through 2202. As shown as 2203 in the above figure, on page 2200 data 2203 is described, which is the first data block of the data in portion 2401 shown in FIG. 24 that excludes the tags from the contents between the body tags and that is divided into 128 bytes; as shown as 2204 in the above figure, on page 2201 data 2204 is described, which is the second data block in portion 2401 that excludes the tags from the contents between the body tags and that is divided into 128 bytes shown in FIG. 24; and, as shown as 2205 in the above figure, on page 2203 data 2205 is described, which is the third data block in portion 2401 that excludes the tags from the contents between the body tags and that is divided into 128 bytes.

Next, document data division section 1914 sends each divided page 2600 and 2601 to document data characteristic extraction section 115. Then, document data characteristic extraction section 115 extracts the characteristic of each page 2200 to 2202 (S 2005).

For example, when document data characteristic extraction section 115 extracts an 8-byte character sequence from the top of the data of the contents between the BODY tags excluding the tags on each page 2200 to 2202 as the characteristic of each page 2200 to 2202, the characteristic of each page 2200 to 2202 will be " ○ ○ ○ ○ " 2301, "Δ Δ Δ Δ" 2302, and "ⓞ ⓞ ⓞ ⓞ" 2303, respectively.

Next, document data characteristic extraction section 115 sends each divided page 2200 through 2202 and each page's extracted characteristic 2301 through 2303 to document data transfer link addition section 116. Then, similar to the processing of Embodiment 1, document data transfer link addition section 116 adds link information that indicates a link to another page to each divided page 2200 to 2202 (S 2006).

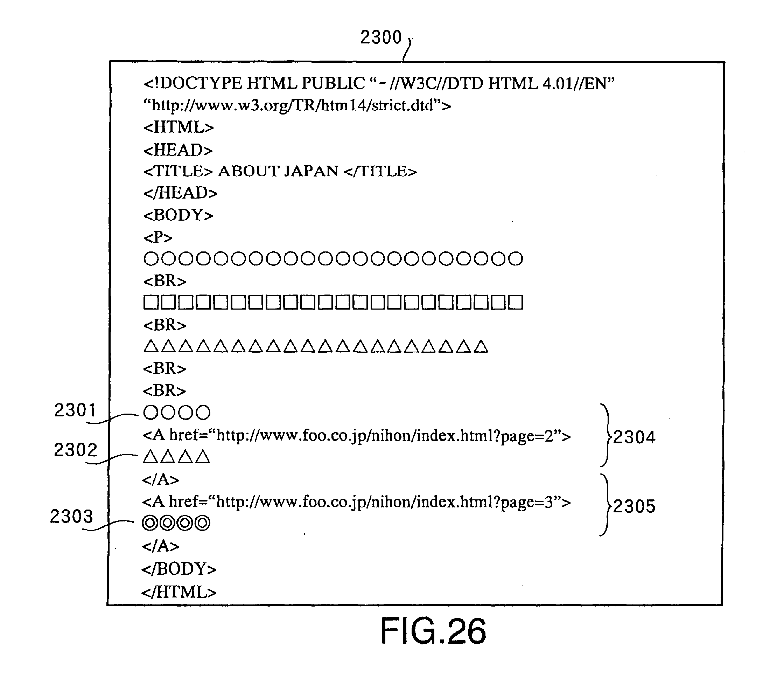

FIG. 26 shows an example of adding link information to page 2200 of FIG. 25 . As obvious from FIG. 26, in document data 2300, link tag 2304 that indicates a link to page 2201 and link tag 2305 that indicates a link to page 2202 are described, in addition to page 2200's characteristic " ○ ○ ○ ○ " 2301. In link tag 2304, page 2201's characteristic "Δ Δ Δ Δ" 2302 is described. In link tag 2305, page 2202's characteristic "ⓞ ⓞ ⓞ ⓞ " 2303 is described.

Next, document data transfer link addition section 116 sends each page that is added link information to another page to document data division modifying link addition section 1917. Then to each divided page, document data division modifying link addition section 1917 adds link information that specifies the size of division upon newly dividing document data (S 2007).

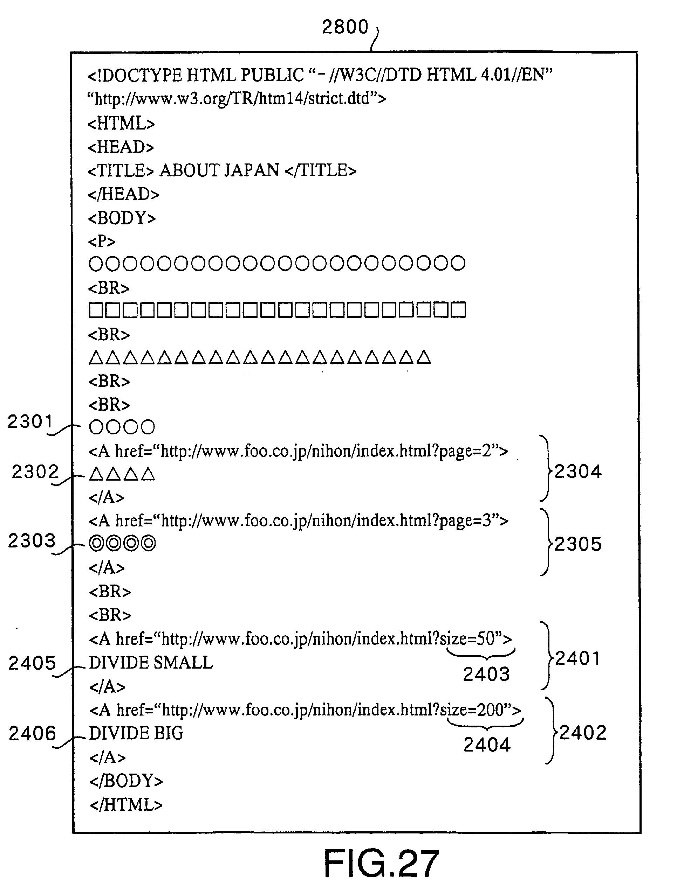

FIG. 27 shows an example of document data wherein link information 2401 and 2402 that specify the size of division are added to the page shown in FIG. 26. As with document data 2400, link information 2401 and 2402 that specify the size of division are added to document data 2300 shown in FIG. 26. In link information 2401, there are description 2403 that indicates the size of division and description 2405 "divide small" that indicates the contents of link information 2401. In addition, in link information 2402, there are description 2404 that indicates the size of division and description 2406 "divide big" that indicates the contents of link information 2402.

By thus adding inside link information 2401 and 2402 description 2405 and 2406 that indicate each link information's contents, the user is able to know the way division will be performed based on link information 2401 and 2402.

Next, document data division modifying link addition section 1917 sends each page that is added link information that specifies the size of division to document data transmission section 117. Then, document data transmission section 117 transmits the top page of the divided document data to terminal apparatus 120 (S 2008).

Terminal apparatus 120 receives document data 2300 of the divided top page transmitted from server apparatus 1910 in document data reception section 123.

Document data reception section 123 sends the received document data 2300 to document data display section 124. Then, document data display section 124 analyzes received document data 2300 and displays it to the user.

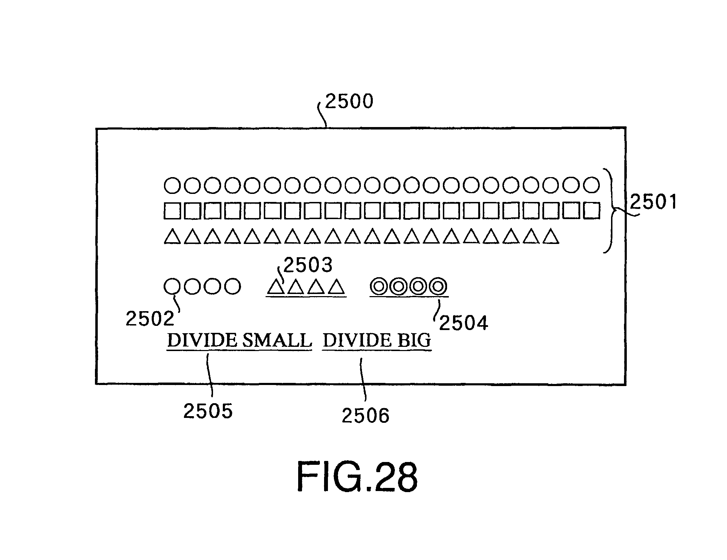

FIG. 28 shows a display example of the page shown in FIG. 27 displayed on document data display section 124. On page 2500 displayed on document data display section 124, text 2503 that is linked to page 2201 and text 2503 that is linked to page 2202 are shown, in addition to portion 2501 that shows its own contents and text 2502 that shows its own characteristic. Furthermore on page 2500, text 2505 that instructs to make the size of document data division small and text 2506 that instructs to make the size of document data division big are shown.

Next, when the user requests through input section 121 of terminal apparatus 120 to modify the size of division by selecting texts 2505 and 2506 that indicate links specifying the size of division, document data request transmission section 122 transmits the request for a change in the size of division to server apparatus 1910. Assume here that the user selected text "divide big" 2505 and requested a change in the size of division.

Server apparatus 1910 receives the request in document data request reception section 111 (S 2001). Then, document data request acquisition section 112 acquires document data that is the source of the requested page from database 113 (S 2002).

Next, the document data division section 1914 divides the acquired document data (S 2003) . As described earlier, the division is performed in such a way that the data in the contents between the BODY tags excluding the tags is divided by a fixed number of bytes . In this case document data division section 1914 divides data that excludes the tags from the contents between the BODY tags by a fixed number of bytes based on the division size modification request from the user. Assume here that the fixed number of bytes is specified as 200 based on the division size modification request from the user.

Then after having divided the acquired document data by every 200 bytes, document data division section 1914 adds tags that are missing so that each divided page complies with the grammar of HTML (S 2004).

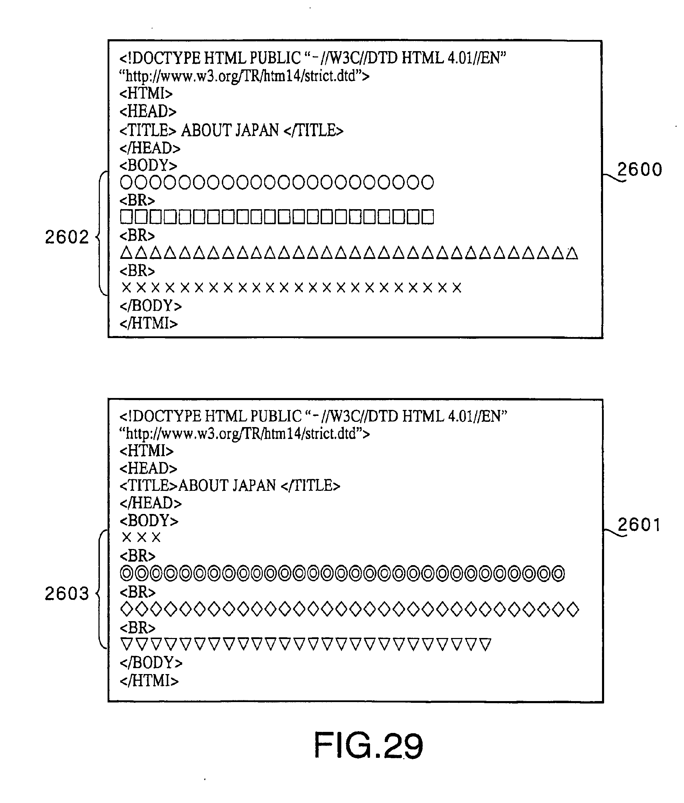

FIG. 29 shows an example of document data wherein the document data shown in FIG. 24 is divided by every 200 bytes on the conditions given above. As shown in FIG. 29, document data 2400 shown in FIG. 24 is divided into two pages 2600 and 2601. As shown as 2602 in the above figure, on page 2600 data 2602 is described, which is the top data block of the data in portion 2401 shown in FIG. 24 that excludes the tags from the contents between the body tags and that is divided by 200 bytes, and as shown as 2403 in the above figure, on page 2601 data 2603 is described, which is the second data block in portion 2401 that excludes the tags from the contents between the body tags and that is divided by 200 bytes shown in FIG. 24.

Next, document data division section 1914 sends each divided page 2600 and 2601 to document data characteristic extraction section 115. Then, document data characteristic extraction section 115 extracts the characteristic of each page 2600 and 2601 (S 2005) . Here again, document data characteristic extraction section 115 extracts an 8-byte character sequence from the contents between the BODY tags on each page 2600 and 2601 excluding the tags as the characteristic of each page. For example, the characteristic of each page 2600 and 2601 will be " ○ ○ ○ ○ " 2701 and " × × × ⓞ" 2702, respectively.

Next, document data characteristic extraction section 115 sends each divided page and each page's extracted characteristic to document data transfer link addition section 1916. Then, document data transfer link addition section 1916 adds these characteristics 2701 and 2702 to the link information on each divided page 2600 and 2601 that each indicates a link to another page (S 2006).

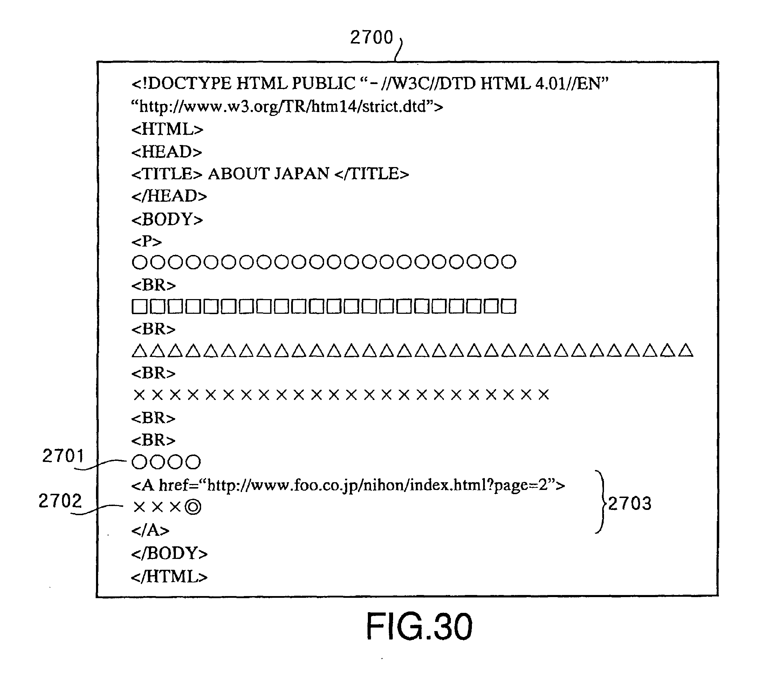

FIG. 30 shows an example of adding link information to page 2600 of FIG. 29 . As obvious from FIG. 30, in document data 2700, link tag 2703 that indicates a link to page 2601 is described in addition to page 2600's characteristic "○ ○ ○ ○ " 2701. In link tag 2703, page 2601's characteristic " × × × ⓞ"2702 is described.

Next, document data transfer link addition section 117 sends each page that is added link information to another page to document data division modifying link addition section 1917. Then to each divided page, as the above-described processing, document data division modifying link addition section 1917 adds link information that specifies the size of division (S 2007).

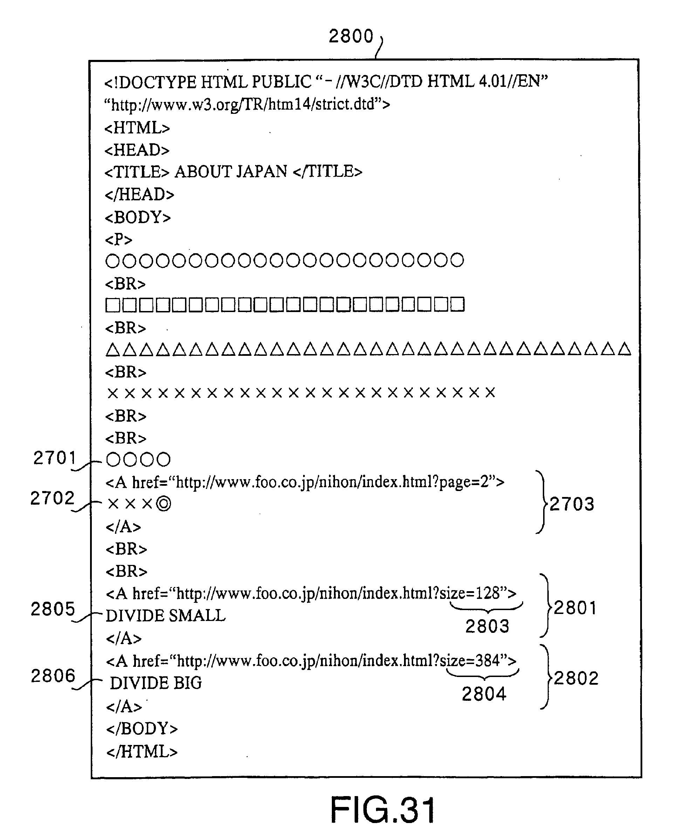

FIG. 31 shows sample document data 2800 wherein link information 2801 and 2802 that specify the size of division are added to the page shown in FIG. 30. As with document data 2800, link 2801 and 2802 that specify the size of division are added to document data 2700 shown in FIG. 30. In link information 2801, there are description 2803 that indicates the size of division and description 2805 "divide small" that indicates the contents of link information 2801. In link information 2802, there are description 2804 that indicates the size of division and description 2806 "divide big" that indicates the contents of link information 2802.

Next, document data division modifying link addition section 1917 sends each page that is added link information that specifies the size of division to document data transmission section 117. Then, document data transmission section 117 transmits the top page of the divided document data to terminal apparatus 120 (S 2008). On the other hand, terminal apparatus 120 receives document data 2800 of the top divided page transmitted from server apparatus 1910 in document data reception section 123.

Document data reception section 123 sends the received document data 2800 to document data display section 124. Then, document data display section 124 analyzes received document data 2800 and displays it to the user.

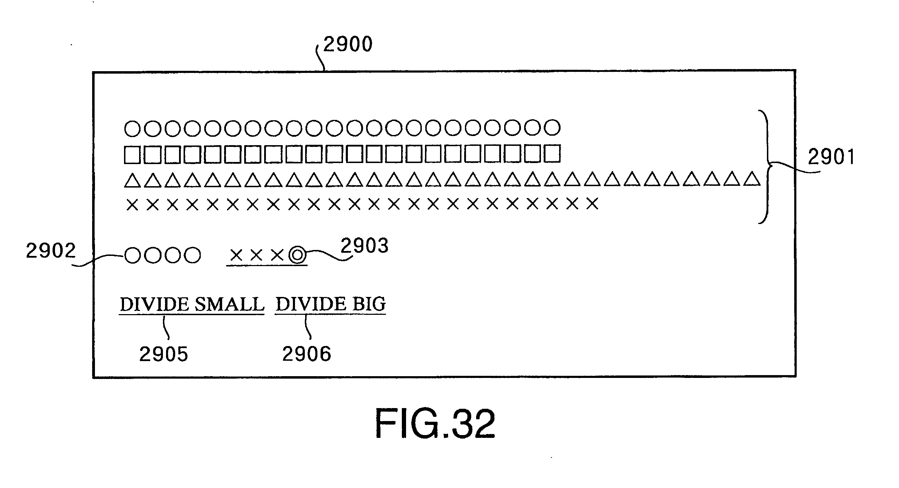

FIG. 32 shows a display example of the page shown in FIG. 31 displayed on document data display section 124. On page 2900 displayed on document data display section 124, text 2903 that is linked to page 2601 and text 2903 that is linked to page 2602 are shown, in addition to portion 2901 that shows its own contents and text 2902 that shows its own characteristic. Furthermore on page 2900, text 2905 that instructs to make the size of document data division small and text 2906 that instructs to make the size of document data division big are shown.

Then, the user views page 2900 and acquires desired document data by specifying the text that works to display the desired page and by specifying the text that works to perform desired division.

As described above, according to Embodiment 3, it is possible to describe the contents of division scheme into division modifying link information that instructs division modification. By this means, the user viewing document data is able to know the division scheme from the description of division modifying link information. As a result, the user is able to adequately divide document data.

### (Embodiment 4)

Embodiment 4 of the present invention separately comprises an apparatus that has a server function for accumulating and managing document data and an apparatus that has a document data compilation function for extracting each divided document data's characteristic and adding the extracted characteristic to divided document data as link information to another page.

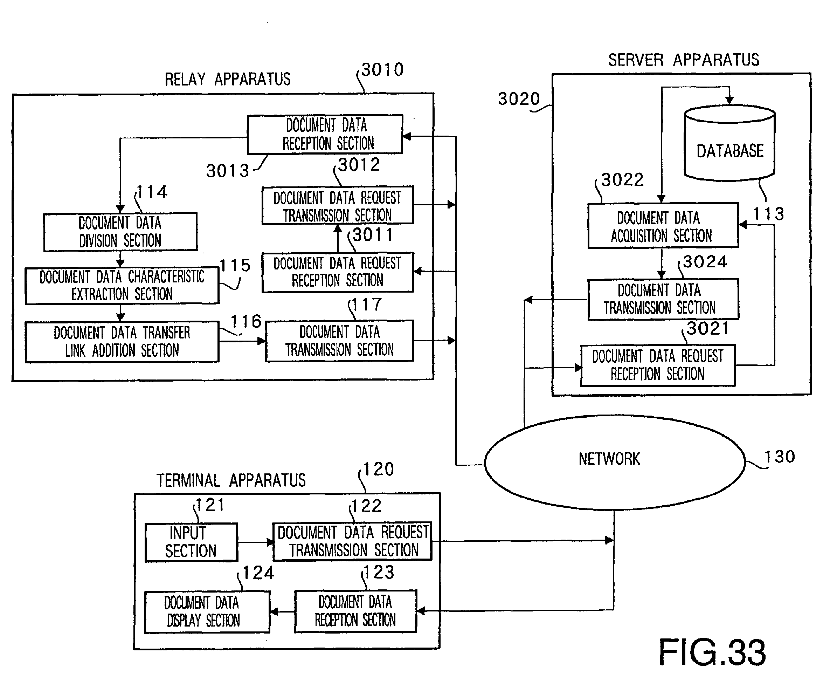

The document data processing system according to Embodiment 4 will be described below. First, the configuration of the document data processing system according to Embodiment 4 will be described with reference to FIG. 33. FIG. 33 is a block diagram showing a configuration of a document data processing system according to Embodiment 4. Incidentally, parts that have been already described will be assigned the same codes.

In FIG. 33, relay apparatus 3010, server apparatus 3020, terminal apparatus 120 are connected to network 130 such as the Internet.

Relay apparatus 3010 comprises document data request reception section 3011 that receives a document data request sent from terminal apparatus 120. Document data request reception section 3011 sends the received document data request to document data request transmission section 3012 comprised in relay apparatus 3010. Then, document data request transmission section 3012 transfers the received document data request to server apparatus 3020. In addition, relay apparatus 3010 comprises document data reception section 3013 that receives the document data sent from server apparatus 3020. Document data reception section 3013 sends the received document data to document data division section 114.

Moreover, relay apparatus 3010 comprises document data division section 114, document data characteristic section 115, document data transfer link addition section 116, and document data transmission section 117 . Document data division section 114, document data characteristic extraction section 115, document data transfer link addition section 116, and document data transmission section 117 were all described with reference to Embodiment 1, so their detailed explanations will be omitted.

On the other hand, server apparatus 3020 comprises document data request reception section 3021 that receives a document data transmission request sent from relay apparatus 3010 or terminal apparatus 120. Document data request reception section 3021 sends the received document data request to document data acquisition section 3022 comprised in server apparatus 3020.

Document data acquisition section 3022 acquires the document data that corresponds to the received document data request from database 113 and sends the acquired document data to document data transmission section 3024 comprised in server apparatus 3020. As for database 113, description has been given and will be omitted here.

Document data transmission section 3024 transmits the document data sent from document data acquisition section 3022 to relay apparatus 3010 or terminal apparatus 120.

In addition, terminal apparatus 120 employs a configuration same as that has been described. Terminal apparatus 120 is made capable of transmitting a document data request to relay apparatus 3010, receiving the requested document data, and displaying the document data, following user operations.

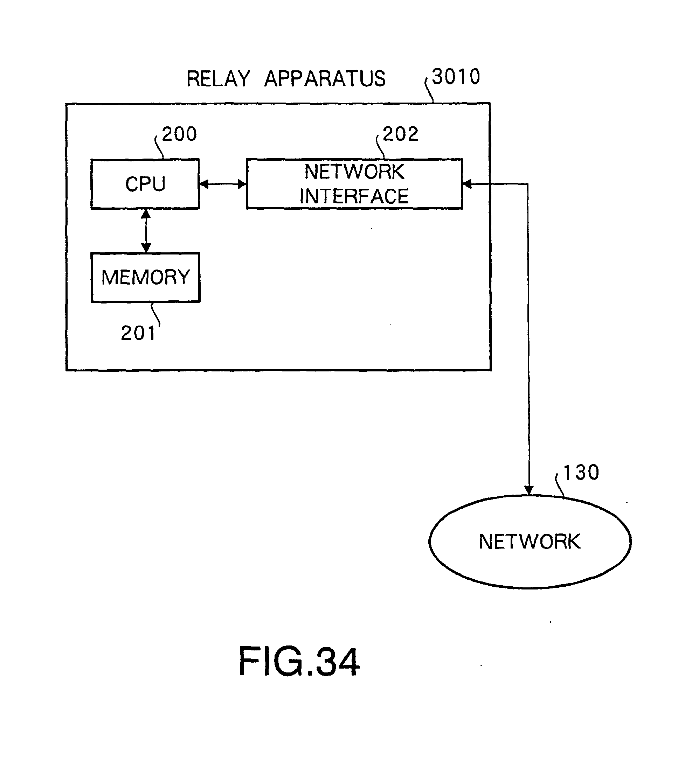

FIG. 34 is a hardware configuration diagram showing relay apparatus 3010 implemented with a computer.

With CPU 200 carrying out programs stored in memory 201, the functions of document data division section 114, document data characteristic extraction section 115, and document data transfer link addition section 116 are implemented. In addition, with CPU 200 that carries out programs stored in memory 201 and using network interface 202, the functions of document data request reception section 3011, document data request transmission section 3012, document data receiving part 3013, and document data transmission section 117 are implemented.

The document data processing system according to Embodiment 4 makes a request for document data to relay apparatus 3010 by specifying the identifier such as URL from input section 121 in terminal apparatus 120. Then, relay apparatus 3010 acquires the document data that corresponds to the request sent from terminal apparatus 120 from server apparatus 3020 and applies predetermined processing upon this document data and transmits it to terminal apparatus 120.

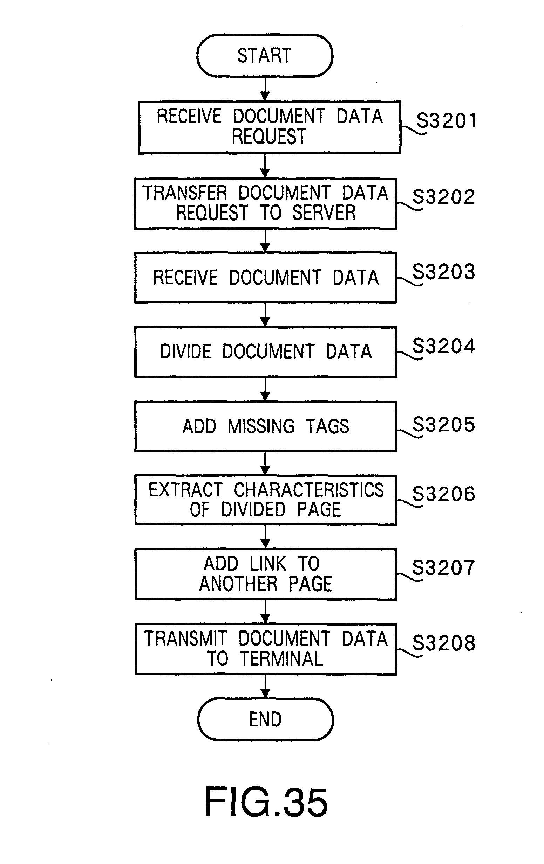

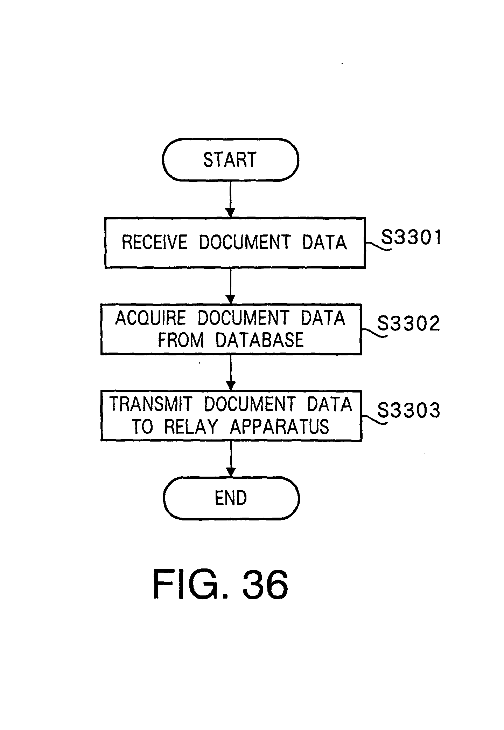

The operation of the document data processing system according to Embodiment 4 will be described below with reference to the flowcharts of FIG. 35 and FIG. 36. FIG. 35 is a flowchart showing the operation of relay apparatus 3010, and FIG. 36 is a flowchart showing the operation of server apparatus 3020.

First, relay apparatus 3010 receives a document data request sent from terminal apparatus 120 in document data request reception section 3011 (S 3201) and transfers the received request to server apparatus 3020 by means of document data request transmission section 3012 (S 3202).

In contrast, server apparatus 3020 receives the document data request transmitted from relay apparatus 3010 in document data request reception section 3021 (S 3301) and document data acquisition section 3022 acquires the requested document data from database 113 ( S 3302). FIG. 7 shows an example of document data that document data acquisition section 3022 acquires from database 3023.

Document data acquisition section 3022 sends the received document data to document data transmission section 3024. Then, document data transmission section 3024 transmits the document data to relay apparatus 3010 (S 3303).

In contrast, relay apparatus 3010 receives the document data transmitted from server apparatus 3020 in document data reception section 3013 (S 3203), and document data reception section 3010 sends the received document data to document data division section 114. Then, document data division section 114 divides the document data (S3204). As with Embodiment 1, document data division section 114 performs the division of the document data by splitting, for example, H1 tags that are title tags. Then to each page, document data division section 114 adds tags that are missing so that each page complies with the grammar of HTML (S 3205 ) . FIG. 8 shows an example showing the document data shown in FIG. 7 divided.

Next, document data division section 114 sends each divided page to document data characteristic extraction section 115. Then, document data characteristic extraction section 115 extracts each divided page's characteristic (S 3206) . For example, when the contents between the H1 tags that are title tags is extracted as each page's characteristic, the characteristic of each page 500 to 502 of FIG. 8 will be "land," "climate," and "population," respectively.

Next, document data characteristic extraction section 115 sends each divided page and each page's extracted characteristic to document data transfer link addition section 116. Then, document data transfer link addition section 116 adds link information to another page to each divided page (S 3207). FIG. 9 shows an example of adding link information to page 500 of FIG. 8.

Next, document data transfer link addition section 116 sends each page that is added link information to another page to document data transmission section 117. Then, document data transmission section 117 transmits the top page of the divided document data to terminal apparatus 120 (S 3208).

In correspondence with this, terminal apparatus 120 receives each divided page transmitted from relay apparatus 3010 in document data reception section 123. Next, document data reception section 123 sends the received page to document data display section 124. Then, document data display section 124 analyzes the received page and displays it to the user.

FIG. 11 shows a display example of the page shown in FIG. 9 displayed on document data display section 124.

Next, when the user selects a link to another page through input section 121 of terminal apparatus 120 and thus requests document data of another page, document data request transmission section 122 transmits a request for another page to relay apparatus 3010. Assume here that the user requested a page by selecting a link "climate."

Relay apparatus 3010 receives the request by means of document data request reception section 3011 (S 3201) and transfers the received request to server apparatus 3020 by means of document data request transmission section 3012 (S 3202). Server apparatus 3020 receives the document data request transmitted from relay apparatus 3010 by means of document data request reception section 3021 (S 3301) and acquires the requested document data from database 113 by means of document data acquisition section 3022 (S 3302).

Next, document data acquisition section 3022 sends the acquired document data to document data transmission section 3024, and document data transmission section 3024 transmits the document data to relay apparatus 3010 (S 3303).

Relay apparatus 3010 receives the document data transmitted from server apparatus 3020 by means of document data reception section 3013 (S 3203) and divides the received document data by document data division section 114 (S 3204). Similar to the methods described above, document data division section 114 divides the document data by separating the data by H1 tags that are title tags. Then to each divided document data page, document data division section 114 adds tags that are missing so that each page complies with the grammar of HTML (S 3205). FIG. 8 shows examples of divided document data.

Next, document data division section 114 sends each divided page to document data characteristic extraction section 115. Then, document data characteristic extraction section 115 extracts each page's characteristic (S 3206) . Similar to the above described methods, document data characteristic extraction section 115 extracts the contents between H1 tags as the characteristic of each page. The characteristic of each page 500 to 502 of FIG. 8 will be "land," ""climate," and "population," respectively.

Next, document data characteristic extraction section 115 sends each divided page and each page's extracted characteristic to document data transfer link addition section 116. Then, document data transfer link addition section 116 adds link information to another page to each divided page (S 3207 ) . FIG. 12 shows an example of adding link information to page 501 of FIG. 8.

Next, document data transfer link addition section 116 sends each page that is added link information to another page to document data transmission section 117. Then, document data transmission section 117 transmits the divided page requested from terminal apparatus 120 to terminal apparatus 120 (S 3208).

Terminal apparatus 120 receives the divided page transmitted from relay apparatus 3010 by means of document data receiving section 123.

Document data receiving section 123 sends the received page to document data display section 124, which then displays the received page to the user.

FIG. 13 shows a display example of the page shown in FIG. 12 displayed on document data display section 124.

As described above, according to Embodiment 4, it is possible to separate server apparatus 3020 that has server functions for accumulating and managing document data and relay apparatus 3010 that has document data compilation functions for dividing document data, extracting characteristics from divided document data, and adding the extracted characteristics to divided document data as link information to other pages.

### (Embodiment 5)

Embodiment 5 of the present invention relates to a document data processor that divides input document data, extracts characteristics from the divided document data, and adds the extracted characteristics to the divided document data as link information to other pages and outputs the data.

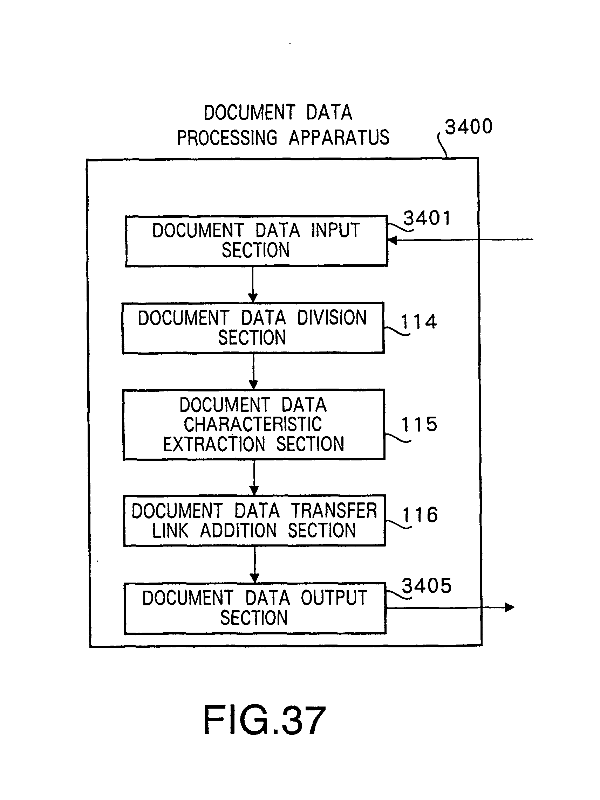

The configuration of the document data processor according to Embodiment 5 will be described below with reference to FIG. 37. FIG. 37 is a block diagram showing a configuration of a document data processing system according to Embodiment 5 . Incidentally, parts that have been already described will be assigned the same codes.

Document data processor 3400 comprises document data input section 3401 that accepts document data input sent from other apparatus. Document data input section 3401 sends input document data to document data division section 114 comprised in the document data processor 3400.

In addition, document data processor 3400 comprises document data division section 114, document data characteristic extraction section 115, and document data transfer link addition section 116. Document data division section 114, document data characteristic extraction section 115, and document data transfer link addition section 116 were all described with reference to Embodiment 1, so their detailed explanations will be omitted.

In addition, document data processor 3400 comprises document data output section 3405 that outputs document data output from document data transfer link addition section 116 to other apparatus.

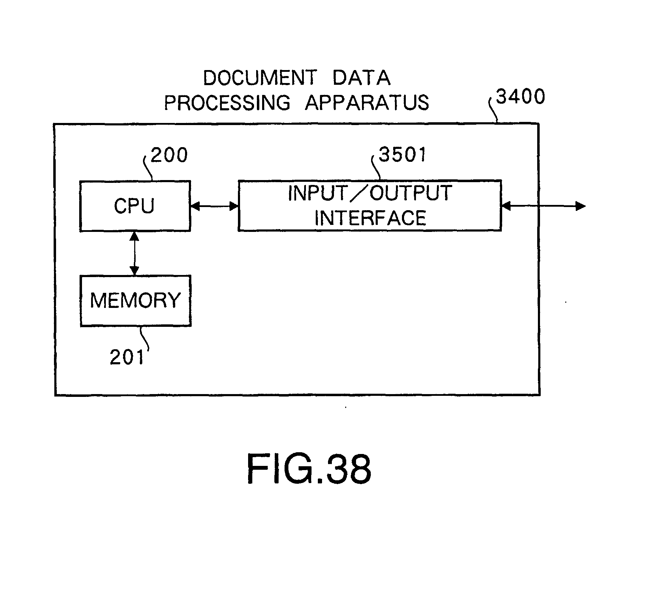

FIG. 38 is a diagram showing a hardware configuration of document data processor 3400 when implemented with a computer.

With CPU 200 carrying out programs stored in memory 201, the functions of document data division section 114, document data characteristic extraction section 115, and document data transfer link addition section 116 are implemented. In addition, with CPU 200 that carries out programs stored in memory 201 and uses input/output interface 3501, the functions of document data input section 3401 and document data output section 3405 are implemented.

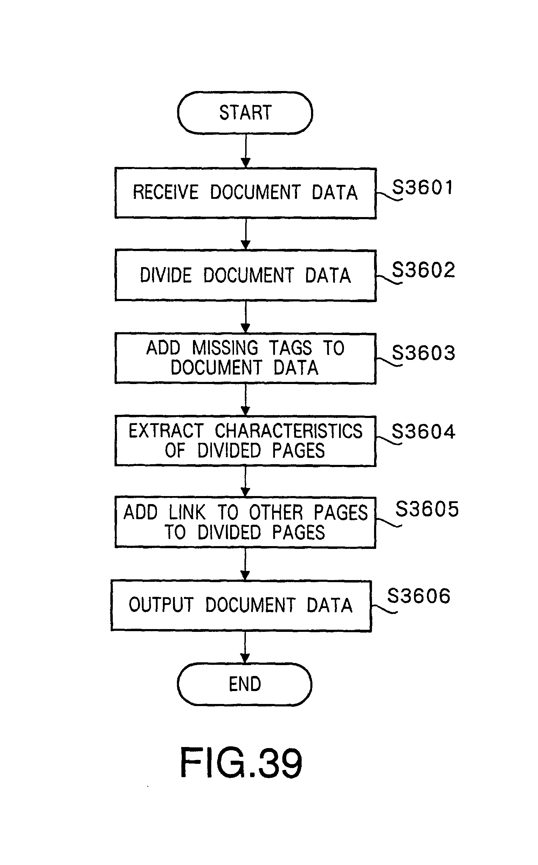

The operation of document data processor 3400 according to Embodiment 5 will be described below with reference to the flowchart of FIG. 39. FIG. 39 is a flowchart showing the operation of document data processor 3400.

First, document data processor 3400 receives document data input transmitted from other apparatus by means of document data input section 3401 (S 3601) . FIG. 7 shows an example of document data input and accepted in document data input section 3401.

Next, document data input section 3401 sends the input document data to document data division section 114. Document data division section 114 divides the document data that is input and accepted ( S 3602). Document data division section 114 divides the document data by separating the data by, for example, H1 tags that are title tags and then adds tags that are missing so that each divided page complies with the grammar of HTML (S 3603). FIG. 8 shows an example showing the document data shown in FIG. 7 divided.

Next, document data division section 114 sends each divided page to document data characteristic extraction section 115. Then, document data characteristic extraction section 115 extracts each page's characteristic (S 3604). For example, when the contents between H1 tags that are title tags is extracted as each page's characteristic, the characteristic of each page 500 to 502 of FIG. 8 will be "land," "climate," and "population," respectively.

Next, document data characteristic extraction section 115 sends each divided page and each page's extracted characteristic to document data transfer link addition section 116. Then, document data transfer link addition section 116 adds link information to another page to each divided page (S 3605 ) . FIG. 9 shows an example of adding link information to page 500 of FIG. 8. Furthermore, FIG. 10 shows the relationship between requested document data and each divided page.

Next, document data transfer link addition section 116 sends each page that is added link information to another page to document data output section 3405. Then, document data output section 3405 outputs the top page of the divided document data to other apparatus (S 3606).

As described above, according to Embodiment 5, it is possible to divide document data transmitted from other apparatus, extract characteristics from the divided document data, and add the extracted characteristics to the divided document data as link information to other pages.

### (Embodiment 6)

According to Embodiment 6 of the present invention, a cache section that stores document data is built in a terminal apparatus that receives document data, and when a divided page is found in the cache section, the way link information is described into this page is changed.

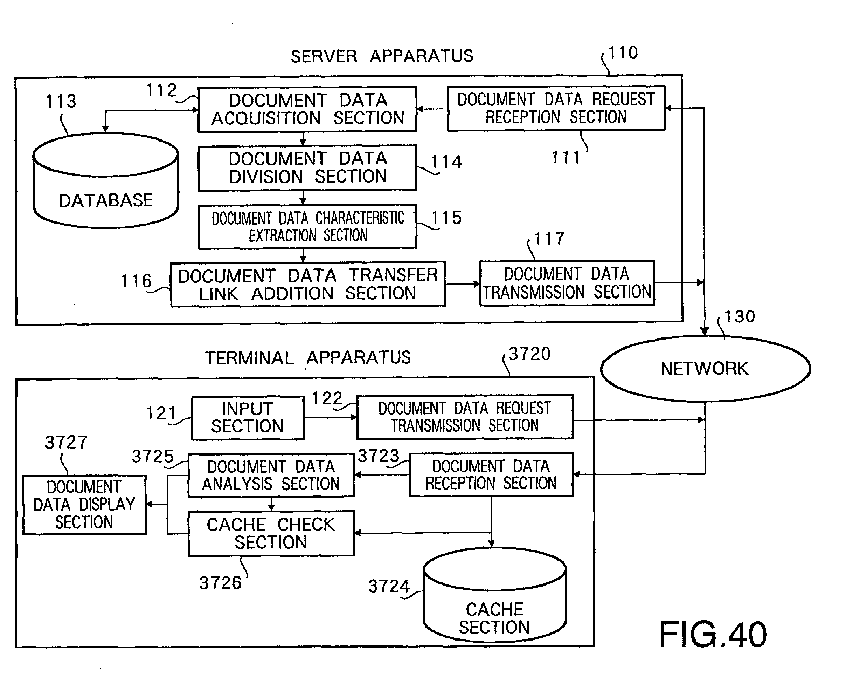

The document data processing system according to Embodiment 6 will be described below in detail with reference to the accompanying drawings. First, the configuration of the document data processing system according to Embodiment 6 will be described with reference to FIG. 40. FIG. 40 is a block diagram showing a configuration of a document data processing system according to Embodiment 6. Incidentally, parts that have been already described will be assigned the same codes.

Server apparatus 110 and terminal apparatus 3720 are connected to network 130 such as the Internet.

The configuration of server apparatus 110 is the same as Embodiment 1, and explanation will be omitted here.

Terminal apparatus 3720 can be implemented by means of an all-purpose machine such as a personal computer. Terminal apparatus 3720 comprises input section 121 and document data request transmission section 122.

In addition, terminal apparatus 3720 comprises document data reception section 3723 that receives the document data sent from server apparatus 110. Document data receiving section 3723 sends the received document data to cache section 3724 and document data analysis section 3725 comprised in terminal apparatus 3720.

Cache section 3724 is a memory means to store received document data.

Document data analysis section 3725 analyzes the received document data and acquires the document data's link information and such. Then, document data analysis section 3725 sends the analysis result to document data display section 3727 and cache check section 3726 comprised in terminal apparatus 3720.

Cache check section 3726 checks as to whether there is in cache section 3724 document data that corresponds to the link information that document data analysis section 3725 acquired. Cache check section 3726 transmits this check result to document data display section 3727.

In addition, document data display section 3727 displays the document data sent from document data analysis section 3725 in accordance with the check result in cache check section 3726.

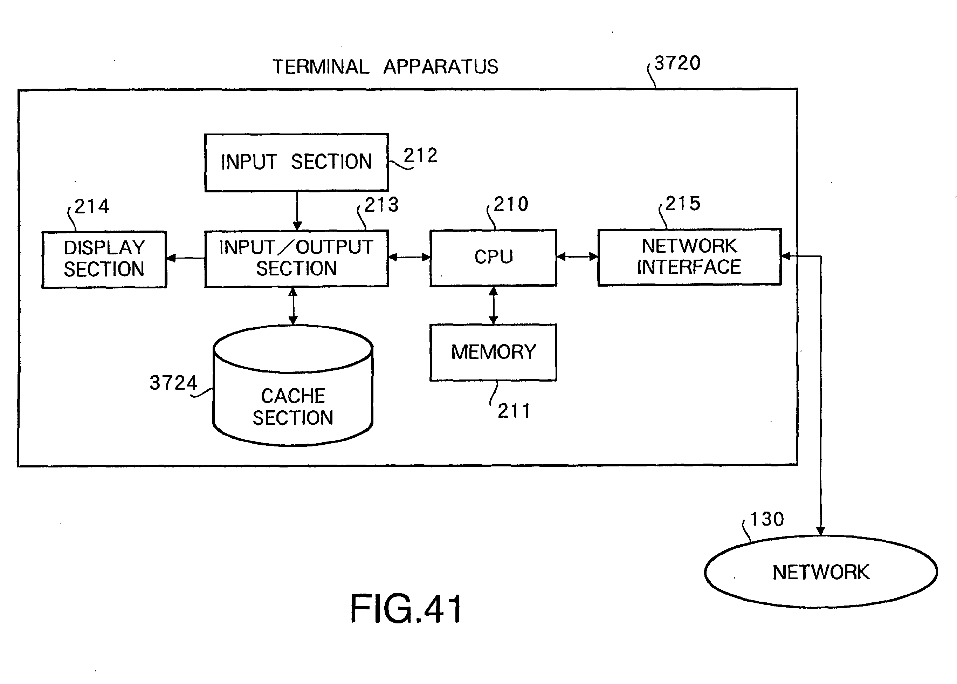

FIG. 41 is a diagram showing a hardware configuration of terminal apparatus 3720 as when implemented with a computer.

Terminal apparatus 3720 using a computer, with CPU 200 that carries out programs stored in memory 201 and uses network interface 215 and input/output interface 213, functions as document data request transmission section 122, document data request reception section 3723, document data analysis section 3725, and cache check section 3726. Moreover, with CPU 210 carrying out a program stored in memory 211 and using display section 214, the function of document data display section 3727 is implemented.

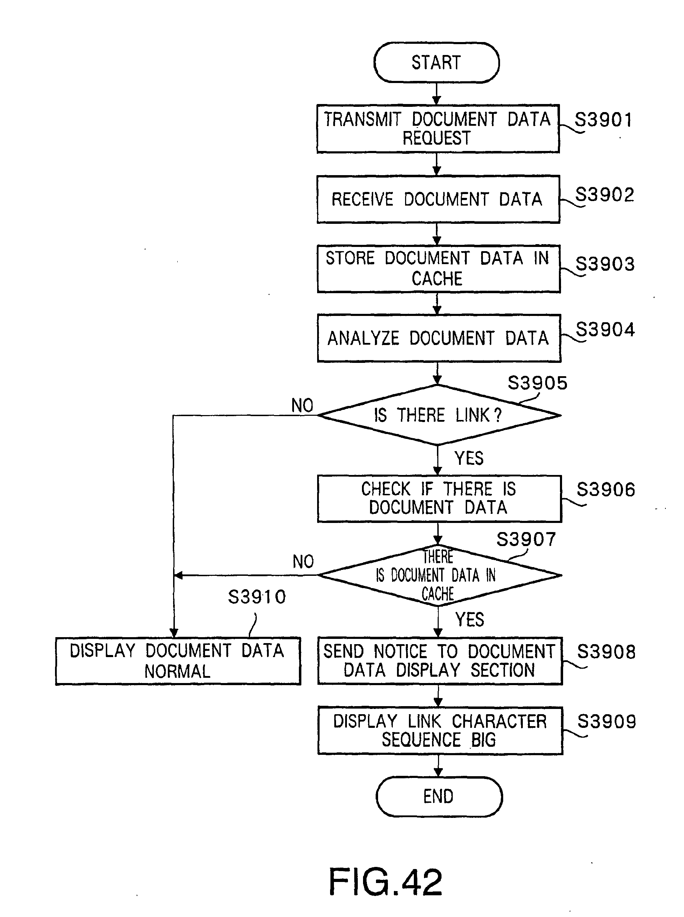

The operation of terminal apparatus 3720 will be described below with reference to the flowchart of FIG. 42.

First, through input section 121 of terminal apparatus 3720, the user requests document data described in a structural description language such as HTML and stored in database 113 of server apparatus 110 by specifying an identifier such as a URL. Next, document data request transmission section 122 transmits the input request to server apparatus 110 (S 3901).

In correspondence with this, server apparatus 110 receives the request transmitted from terminal apparatus 3720 by means of document data request reception section 111 and acquires the requested document data from database 113 by means of document data acquisition section 112.

Then, document data division section 114 divides the acquired document data. Next, document data characteristic extraction section 115 extracts the characteristic of each page of the divided document data. Next, to each divided page document data transfer link addition section 117 adds another page's extracted characteristic as link information and sends each page to document data transmission section 117. Then, document data transmission section 117 sends this document data that is added link information to terminal apparatus 3720 .

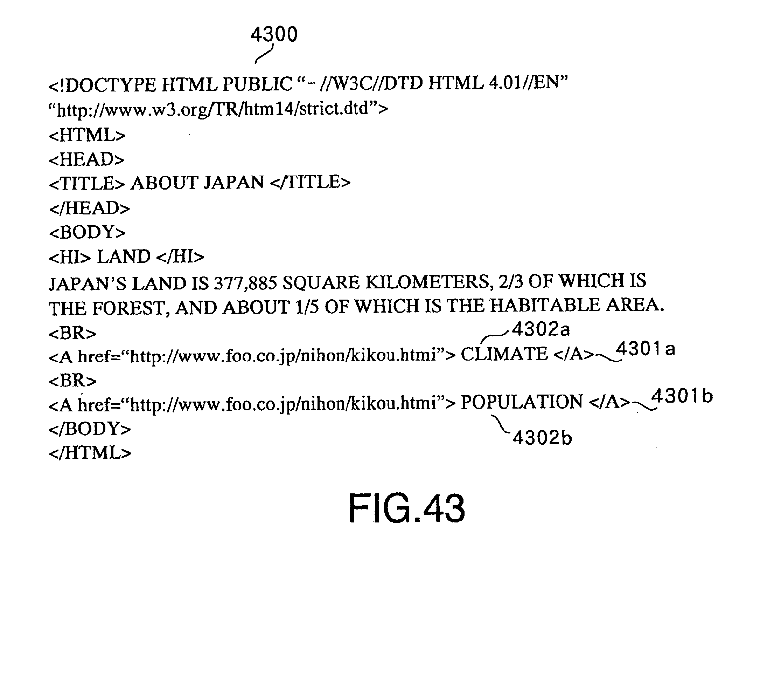

FIG. 43 shows an example of document data transmitted from document data transmission section 117. As obvious from FIG. 43, in document data 4300, link information 4301a and 4301b that each indicate a link to another page are described. Moreover, in link tags 4301a and 4301b, "climate" 4302a and "population" 4302b that are other pages' characteristics are described.

Next, terminal apparatus 3720 receives the document data transmitted from server apparatus 110 by means of document data reception section 3723 (S 3902).

Document data reception section 3723 sends the received document data to cache section 3724 and, while storing the document data in match with the identifiers for the document data (S 3903) , sends it to document data analysis section. 3725.

Document data analysis section 3725 analyzes the received document data (S 3904 ) , and checks as to whether or not there is a link to another document data in the document data (S 3905).

Document data analysis section 3725, when judging in S 3905 that there is link information to different document data in the document data, sends the identifier of this linked, different document data to cache check section 3726.

Cache check section 3726 checks as to whether there is in cache section 3724 document data that corresponds to the received identifier (S 3906, S 3907).

Cache check section 3726, when judging in S 3907 that there is document data that corresponds to the link information to different document data in cache section 3724, notifies document data display section 3727 of its identifier (S 3908)

Next, document data display section 3727 displays the character sequences described in the link information and that indicate links to other pages big in accordance with the document data sent from document data analysis section 3725 and the check result sent from cache check section 3726 (S 3909).

Meanwhile, when cache check section judges in S 3907 that there is no document data that corresponds to the link information in cache section 3724, cache check section 3726 notifies document data display section 3727 of the identifier that corresponds to the document data.

Then, document data display section 3727 displays the character sequence described in the link information and that indicate a link to another page in a normal size in accordance with the document data sent from document data analysis section 3725 and the check result sent from cache check section 3726 (S 3910).

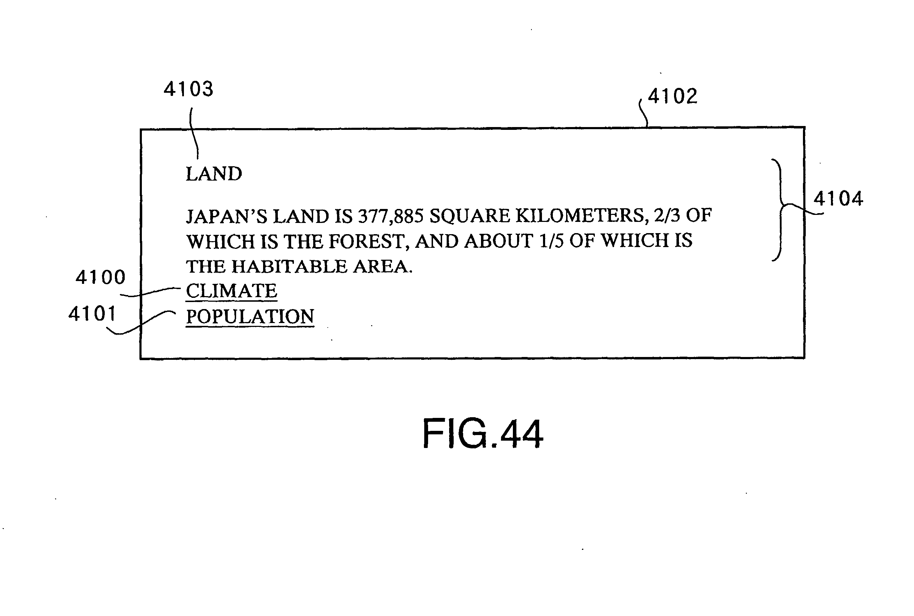

FIG. 44 shows the page in FIG. 43 displayed on document data display section 3727 of terminal apparatus 3720.

On page 4102 displayed on document data display section 3727, texts 4100 and 4101 that are linked to other pages are displayed in addition to portion 4104 that indicates its own contents and text 4103 that indicates its own characteristic. As obvious from the above figure, text 4100 is displayed bigger than text 4101 that is displayed in normal size.

In other words, this indicates that the document data linked to text 4100 exists in cache section 3724 and that the document data linked to text 4101 does not exist in cache section 3724.

As described above, according to Embodiment 6, when a divided page is found in cache section 3724, it is possible to modify the way of describing link information to this page in cache section 3724. By this means, the user viewing document data is able to judge as to whether a linked page exists in cache section 3724 on the basis of the dif ference in the way link information is described. This enables the user to selectively display a page stored in cache section 3724. As a result, the user can view document data with ease.

In addition, according to Embodiment 6, it is possible to make text that indicates a link to a page that exists in cache section 3724 bigger than text that indicates a link to a page that does not exist in cache section 3724. By this means, the user is able to visually recognize a page that exists in cache section 3724 from the link text.

Moreover, although with Embodiment 6 text that indicates a link to a page that exists in cache section 3724 is bigger than text that indicates a link to a page that does not exist in cache section 3724,it is still possible to make the length of text that indicates a link to a page that exists in cache section 3724 longer than text that indicates a link to a page that does not exist in cache section 3724. Furthermore, it is possible to change the color or thickness of color of text that indicates a link to a page that exists in cache section 3724. It is also possible to show text that indicates a link to a page that exists in cache section 3724 hatched.

Incidentally, although Embodiment 6 adopts text that indicates the contents of a linked page as text that indicates a link, such configuration is also possible that does not adopt text that indicates the contents of a linked page as text that indicates a link.

Furthermore, although Embodiment 1 through Embodiment 6 have been described such that undivided document data is accumulated in database 113 and then divided in document data division section 114, such configuration is also possible wherein database 113 stores document data that is divided in fixed size in advance.

The present specification is based on Japanese Patent Application No. 2001-84803 filed on March 23, 2001, and Japanese Patent Application No. 2002-61132 filed on March 6, 2002, entire contents of which is expressly incorporated herein for reference.

### Industrial Applicability

As thus described above, according to the present invention, when the user makes a request for document data to a server apparatus or a relay apparatus through a resource-limited terminal apparatus such as a mobile phone, the server apparatus or the relay apparatus divides the requested document data and adds characteristics extracted from different pages such as titles to each divided page as text that indicates a link to another page. By this means, the user is able to judge as to whether or not to move onto other pages based on the characteristics of other linked pages . As a result of this, an advantageous effect is achieved that the user is able to view document data with ease.

Moreover, according to the present invention, when the user makes a request for document data to a server apparatus or a relay apparatus through a resource-limited terminal apparatus such as a mobile phone, the server apparatus or the relay apparatus divides the requested document data and variably adds characteristics extracted from different pages such as titles to each divided page as text that indicates a link to another page depending on the data volume of each page. By this means, based on the information about the data volume of other linked pages, the user is able to judge as to whether or not to move onto other linked pages. As a result of this, an advantageous effect is achieved that the user is able to view document data with ease.

Moreover, according to the present invention, when the user makes a request for document data to a server apparatus or a relay apparatus through a resource-limited terminal apparatus such as a mobile phone, the server apparatus or the relay apparatus divides the requested document data and adds a link that specifies the size of division to each divided page. By this means, an advantageous effect is achieved that the user is able to specify the size of division and view document data with ease.

Moreover, according to the present invention, when a terminal apparatus acquires document data from a server apparatus or a relay apparatus, it is possible to store the acquired document data in a cache while checking whether the cache stores different document data linked to the acquired document data, and, when such different document data is stored in the cache, changes the text display of the text that indicates a link to this different document data. By this means, by viewing linked document data the user is able to learn from text that indicates a link whether it is necessary to acquire document data from the server apparatus or the relay apparatus. As a result of this, an advantageous effect is achieved that the user is able to view document data with ease.

## Claims

1. A document data processor, comprising:
a characteristic extraction section that from each of a plurality of divided document data which one document data is divided into extracts information showing a characteristic of a divided document data, and
a link addition section that adds to said one divided document data link information indicating a link to said different divided document data and adds information showing a characteristic of said different document data extracted by said characteristic extraction section into said link information.

2. The document data processor according to claim 1, wherein the information showing said characteristic of said divided document data is a title of said divided document data.

3. The document data processor according to claim 1, wherein the information showing said characteristic of said divided document data is a top word or phrase in said divided document data.

4. The document data processor according to claim 1, wherein the information showing said characteristic of said divided document data is a most frequently recorded character sequence in said divided document data.

5. A document data processor, comprising:
a data volume check section that checks a data volume of each of plurality of divided document data which one document data is divided into, and
a link addition section that adds to said one divided document data link information indicating a link to said different divided document data and adds into said link information a character sequence indicating said different divided document data, said character sequence being subject to variation with a data volume of said different divided document data checked by said data volume check section.

6. The document data processor according to claim 5, wherein said link addition section changes a length of said character sequence with said data volume of said divided document data.

7. The document data processor according to claim 5, wherein said link addition section changes a color of said character sequence with said data volume of said divided document data.

8. The document data processor according to claim 5, wherein said link addition section changes a character size of said character sequence with said data volume of said divided document data.

9. A document data processor, comprising:
a division section that divides document data into a plurality of divided document data;
a link addition section that adds to said one divided document data link information indicating a link to said different divided document data and adds into said link information a character sequence indicating said different divided document data; and
a division link addition section that adds to said division section division link information instructing said division section to re-divide said document data by a predetermined size and adds into said division link information a character sequence indicating said predetermined size whereby said document is to be re-divided.

10. A server apparatus, comprising:
a request reception section that receives a document data request from a terminal apparatus via a network;
a characteristic extraction section that from each of a plurality of divided document data which document data that corresponds to said request is divided into extracts information that shows a characteristic of a divided document data;
a link addition section that adds to said one divided document data link information indicating a link to said different divided document data and adds information showing a characteristic of said different divided document data extracted by said characteristic extraction section into said link information; and
a transmission section that transmits linked document data that is added said link information to said terminal apparatus.

11. A server apparatus, comprising:
a request reception section that receives a request for document from a terminal apparatus via a network;
a data volume check section that checks a data volume of each of a plurality of divided document data which document data that corresponds to said request is divided into;
a link addition section that adds to said one divided document data link information indicating a link to said different divided document data and adds into said link information a character sequence showing a characteristic of said different divided document data, said character sequence being subject to variation with said data volume of said different document data checked by said data volume check section; and
a transmission section that transmits linked document data that is added said link information to said terminal apparatus.

12. A server apparatus, comprising:
a request reception section that receives a document data request from a terminal apparatus via a network;
a link addition section that adds to each of a plurality of divided document data link information indicating a link to said dif ferent divided document data and adds into said link information a character sequence indicating said different divided document data;
a division link addition section that adds to a division sectiondivision link information that instructs said division section to re-divide said document data by a predetermined size and adds into said division link information a character sequence indicating said predetermined size whereby said document data is to be re-divided; and
a transmission section that transmits link assigned document data that is added said link information and said division link information to said terminal apparatus.

13. A terminal apparatus, comprising:
an input section that accepts a request for document data from a user;
a request transmission section that sends said request to the server apparatus of claim 10 via a network;
a reception section that receives said link assigned document data corresponding to said request sent from said server apparatus; and
a display section that analyzes said link assigned document data and displays a content of said link assigned document data with the characteristic added into said link information.

14. A terminal apparatus, comprising:
an input section that accepts a request for document data from a user;
a request transmission section that transmits said request to the server apparatus of claim 11 via a network;
a reception section that receives linked document data corresponding to said request sent from said server apparatus; and
a display section that displays a content of said link assigned document data with the characteristic added to said link information, which are subject to variation with said data volume.

15. A terminal apparatus, comprising:
an input section that accepts a request for document data from a user;
a request transmission section that transmits said request to the server apparatus of claim 12 via a network;
a reception section that receives link assigned document data corresponding to said request and sent from said server apparatus; and
a display section that displays a content of said link assigned document data with a character sequence indicating said different divided document data added into said link information and a character sequence indicating said predetermined size added into said division link information.

16. A terminal apparatus, comprising:
a request transmission section that transmits a request for document data to a server apparatus that makes a plurality of divided document data by dividing one document data and transmits link assigned document data, said link assigned document data being said one divided document data added link information indicating a link to said different divided document data and a character sequence indicating said different divided document data;
a reception section that receives said link assigned document data corresponding to said request sent from said server apparatus;
a cache section that holds the sent link assigned document data;
a cache check section that checks whether linked document data that is linked to said sent link assigned document data is in said cache section; and
a document data display section that displays a character sequence added into link information to a linked divided document data that is not in said cache section in a different way from said character sequence added into the link information to said linked divided document data that is in said cache section.

17. The terminal apparatus according to claim 16, wherein said document data display section displays a character sequence added into link information to a linked divided document data that is not in said cache section in different color from said character sequence added into the link information to said linked divided document data that is in said cache section.

18. The terminal apparatus according to claim 16, wherein said document data display section displays a character sequence added into link information to a linked divided document data that is not in said cache section in a different length from said character sequence added into the link information to said linked divided document data that is in said cache section.

19. The terminal apparatus according to claim 16, wherein said document data display section displays a character sequence added into link information to a linked divided document data that is not in said cache section in a different character size from said character sequence added into the link information to said linked divided document data that is in said cache section.

20. A document data processing system, comprising the server apparatus of claim 10 and the terminal apparatus of claim 13.

21. A document data processing system, comprising the server apparatus of claim 11 and the terminal apparatus of claim 14.

22. A document data processing system, comprising the server apparatus of claim 12 and the terminal apparatus of claim 15.

23. A document data processing method, comprising:
extracting from each of a plurality of divided document data which one document data is divided into information showing a characteristic of a divided document data;
adding to said one divided document data link information indicating a link to said different divided document data; and
adding information showing a characteristic of said different divided document data into said link information.

24. A document data processing method, comprising:
checking a data volume of each of a plurality of divided document data which one document data is divided into;
adding to said one divided document data link information indicating a link to said different divided document data; and
adding into said link information a character sequence indicating said different divided document data, said character sequence being subject to variation with said data volume of said different divided document data.

25. A document data processing method, comprising:
dividing document data into a plurality of divided document data;
to said one divided document data, adding link information indicating a link to said different divided document data,
adding a character sequence indicating said different divided document data;
adding link information indicating a link to said different divided document data;
adding division link information instructing a division section to re-divide said document data by a predetermined size; and
adding into said division link information a character sequence indicating said predetermined size whereby said document data is to be re-divided.

26. A document data processing method, comprising:
making a plurality of divided document data by dividing document data upon transmitting said document data;
sending a request for said document data to a server apparatus that adds to said one divided document data link information indicating a link to said different divided document data and transmits said link information a character sequence indicating said different character sequence;
receiving a divided document data corresponding to said request sent from said server apparatus; and
of said different divided document data linked to the sent divided document data, displaying a character sequence added to link information for a linked divided document data that is not in said cache section in a different way from a character sequence added to link information for a linked divided document data that is in a cache section.

27. A program whereby a computer will implement:
extracting from each of said plurality of divided document data which one document data is divided into information showing a characteristic of a divided document data, and
adding to said one divided document data link information indicating a link to said different divided document data, adding information showing a characteristic of said different divided document data into said link information.

28. A program whereby a computer will implement:
checking a data volume of each of a plurality of divided document data which one document data is divided into;
adding to said one divided document data link information indicating a link to said different divided document data; and
adding into said link information a character sequence indicating said different divided document data and being subject to variation with said data volume of said different divided document data.

29. A program, whereby a computer will implement:
dividing document data into a plurality of divided document data;
adding to said one divided document data link information indicating a link to said different divided document data;
adding into said link information a character sequence indicating said different divided document data;
adding link information indicating a link to said different divided document data;
adding division link information instructing a division section to re-divide said document data by a predetermined size; and
adding into said division link information a character sequence indicating said predetermined size whereby said document data is to be re-divided.

30. A program, whereby a computer will implement:
sending a request for document data to a server apparatus that transmits said document data by making a plurality of divided document data by dividing said document data and by adding to said one divided document data link information indicating a link to said different divided document data and by adding into said link information a character sequence indicating said different divided document data, and
displaying, of said different divided document data linked to the sent divided document data, a character sequence added to link information for a linked divided document data that is not in said cache section in a different way from a character sequence added to link information for a linked divided document data that is in a cache section.
